# EUROPEAN PATENT APPLICATION

(11) **EP 4 563 412 A1**
(43) Date of publication of application: **04.06.2025**
(21) Application number: 23846568.6
(22) Date of filing: 26.07.2023
(51) Int. Cl.: B60Q 1/14, F21Y 115/10, F21V 7/00, F21V 14/04, F21W 102/14, F21W 102/165, F21W 102/19

(54) **VEHICULAR HEADLIGHT**

(30) Priority: 27.07.2022 JP 2022119627; 27.07.2022 JP 2022119628; 27.07.2022 JP 2022119629; 27.07.2022 JP 2022119630
(71) Applicant: Koito Manufacturing Co., Ltd., Shinagawa-ku, Tokyo 141-0001 (JP)
(72) Inventor: KATO, Yuichi, Shizuoka-shi, Shizuoka 424-8764 (JP); WATANABE, Shigeyuki, Shizuoka-shi, Shizuoka 424-8764 (JP); SUGIMOTO, Atsushi, Shizuoka-shi, Shizuoka 424-8764 (JP)
(74) Representative: Hoffmann Eitle
(86) International application number: PCT/JP2023/027391
(87) International publication number: WO 2024/024838

(57) **Abstract**

A vehicular headlight (1) includes a light unit (10) and a control unit (CO), and when another vehicle (200) is moving relative to a host vehicle (100), a shaded degree of a shaded region (53) is stronger than when the another vehicle (200) is not moving relative to the host vehicle (100) .

## Description

### Technical Field

The present invention relates to a vehicular headlight.

### Background Art

A vehicular headlight that emits light having a light distribution pattern in which a region overlapping another vehicle located in front of a host vehicle is a light shielding region that is not irradiated with light has been known. Patent Literature 1 below discloses such a vehicular headlight. A light distribution pattern in this vehicular headlight includes a boundary region where brightness changes stepwise from the light shielding region toward an irradiation region irradiated with light between the light shielding region and the irradiation region.

[Patent Literature 1] JP 2016-34785 A

### Summary of Invention

A vehicular headlight according to a first aspect of the present invention includes: a light unit configured to change a light distribution pattern of light to be emitted; and a control unit configured to receive a signal from a detection device that detects another vehicle located in front of a host vehicle and control the light unit, in which when the another vehicle is located in front of the host vehicle, the control unit forms a first region that overlaps at least a part of the another vehicle in the light distribution pattern, and is darker than when the another vehicle is not located in front of the host vehicle, and when the another vehicle is moving relative to the host vehicle, the control unit forms a shaded region adjoining at least a part of an edge of the first region for causing shading, and when the another vehicle is moving relative to the host vehicle, a shaded degree of the shaded region is stronger than when the another vehicle is not moving relative to the host vehicle.

In the vehicular headlight according to the first aspect, when the another vehicle is located in front of the host vehicle, the first region overlapping at least a part of the another vehicle is formed in the light distribution pattern such as a high beam light distribution pattern. The first region is a region darker than when the another vehicle is not located in front of the host vehicle. With this first region, when the another vehicle is located in front of the host vehicle, the amount of light emitted from the host vehicle to the another vehicle is reduced, suppressing glare to a driver of the another vehicle. Meanwhile, as the shaded degree of the shaded region is stronger, the edge of the first region adjoining the shaded region is less noticeable, and is less likely to be visually recognized by the driver of the host vehicle. When the another vehicle is moving relative to the host vehicle, the shaded region is moving together with the first region, but in the vehicular headlight, the shaded degree of the shaded region is stronger than when the another vehicle is not moving relative to the host vehicle. Therefore, in this configuration, it is more difficult for the driver to visually recognize a movement of the edge of the first region adjoining the shaded region than in a case where the another vehicle is moving relative to the host vehicle in a state where the shaded degree of the shaded region is the same as the shaded degree of the shaded region when the another vehicle does not move relative to the host vehicle. Therefore, according to this configuration, when the another vehicle is moving relative to the host vehicle, it is possible to suppress the driver from feeling annoyed about the movement of the first region adjoining the shaded region.

In the vehicular headlight according to the first aspect, when the another vehicle is moving relative to the host vehicle, the control unit may form a first shaded region and a second shaded region in the shaded region, the first shaded region being located on a moving direction side of the another vehicle with respect to the first region in a direction in which the another vehicle moves with respect to the host vehicle, and the second shaded region being located on a side opposite to the first shaded region with respect to the first region, and the first shaded region and the second shaded region may have different shaded degrees.

In this case, the first shaded region may have a stronger shaded degree than the second shaded region.

According to this configuration, it is possible to suppress the driver from feeling uncomfortable about the change in brightness between the first region and the region around the first region in the first shaded region, and the portion followed by the shaded region in the edge of the first region appears unclearer than that when the first shaded region does not have a stronger shaded degree than the second shaded region.

In the vehicular headlight according to the first aspect, the control unit may not form the shaded region when the another vehicle is not moving relative to the host vehicle.

A vehicular headlight according to a second aspect of the present invention includes: a light unit configured to change a light distribution pattern of light to be emitted; and a control unit configured to receive a signal from a detection device that detects another vehicle located in front of a host vehicle and traveling states of the host vehicle and the another vehicle and control the light unit, in which when the another vehicle is located in front of the host vehicle, the control unit forms a first region that overlaps at least a part of the another vehicle in the light distribution pattern and is darker than when the another vehicle is not located in front of the host vehicle, and when at least one of the host vehicle and the another vehicle is traveling on a curve, the control unit forms a shaded region adjoining at least a part of each of left and right edges of the first region for causing shading, and when at least one of the host vehicle and the another vehicle is traveling on the curve, a shaded degree of the shaded region is stronger than when the host vehicle and the another vehicle are traveling on a straight road.

In the vehicular headlight according to the second aspect, when the another vehicle is located in front of the host vehicle, the first region overlapping at least a part of the another vehicle is formed in the light distribution pattern such as a high beam light distribution pattern. The first region is a region darker than when the another vehicle is not located in front of the host vehicle. With this first region, when the another vehicle is located in front of the host vehicle, the amount of light emitted from the host vehicle to the another vehicle is reduced, suppressing glare to a driver of the another vehicle. Meanwhile, as the shaded degree of the shaded region is stronger, the edge of the first region adjoining the shaded region is less noticeable, and is less likely to be visually recognized by the driver of the host vehicle. When at least one of the host vehicle and the another vehicle is traveling on a curve, the shaded region generally tends to move in the left-right direction together with the first region. In this case, in this vehicular headlight, the shaded degree of the shaded region adjoining at least a part of each of the left and right edges of the first region is stronger than in a case where the host vehicle and the another vehicle travel on a straight road. Therefore, in this configuration, it is more difficult for the driver to visually recognize a movement of the edge of the first region adjoining the shaded region than in a case where at least one of the host vehicle and the another vehicle travels on a curve in a state where the shaded degree of the shaded region is the same as the shaded degree of the shaded region when the host vehicle and the another vehicle travel on a straight road. Therefore, according to this configuration, when the host vehicle travels on a curve, it is possible to suppress the driver from feeling annoyed about the movement of the first region adjoining the shaded region.

In the vehicular headlight according to the second aspect, when the host vehicle is traveling on the curve, the control unit may form a first shaded region and a second shaded region in the shaded region, the first shaded region being located on a side where the host vehicle turns with respect to the first region in a left-right direction of the host vehicle traveling on the curve, and the second shaded region being located on a side opposite to the first shaded region with respect to the first region, and the first shaded region and the second shaded region may have different shaded degrees.

In this configuration, in one having a stronger shaded degree of the first shaded region and the second shaded region, it is more difficult for the driver to visually recognize a movement of the edge of the first region adjoining the one having a stronger shaded degree of the first shaded region and the second shaded region than in a case where both the first shaded region and the second shaded region have a weak shaded degree or the same shaded degree. Therefore, according to this configuration, when the host vehicle is traveling on a curve, it is possible to suppress the driver of the host vehicle from feeling annoyed about the movement of the edge of the first region adjoining the one having a strong shaded degree of the first shaded region and the second shaded region.

In this case, the shaded degree of the first shaded region may be stronger than the shaded degree of the second shaded region.

When the host vehicle is traveling on a curve, the driver's line of sight is directed to the side on which the host vehicle turns, and the driver tends to pay attention to the side on which the host vehicle turns. According to this configuration, it is more difficult for the driver to visually recognize a movement of the edge of the first region adjoining the first shaded region located on the side where the host vehicle turns, that is, the side on which the driver pays attention, than in a case where the first shaded region has a weaker shaded degree than the second shaded region. Therefore, according to this configuration, it is possible to prevent the driver from feeling annoyed about the movement of the edge of the first region adjoining the first shaded region located on the side where the host vehicle turns when the host vehicle is traveling on a curve.

In the vehicular headlight according to the second aspect, the control unit may not form the shaded region when the host vehicle and the another vehicle are traveling on the straight road.

A vehicular headlight according to a third aspect of the present invention includes: a light unit configured to change a light distribution pattern of light to be emitted; and a control unit configured to receive a signal from a detection device that detects another vehicle located in front of a host vehicle and a traveling state of the host vehicle and control the light unit, in which when the another vehicle is located in front of the host vehicle and the host vehicle is traveling on a curve, the control unit forms a first region that overlaps at least a part of the another vehicle in the light distribution pattern, and is darker than when the another vehicle is not located in front of the host vehicle, and forms a first shaded region and a second shaded region, the first shaded region being located on a side where the host vehicle turns with respect to the first region and adjoining at least a part of an edge of the first region, and the second shaded region being located on a side opposite to the first shaded region with respect to the first region and adjoining at least a part of an edge of the first region, and the first shaded region and the second shaded region have different shaded degrees.

A vehicular headlight according to a fourth aspect of the present invention includes: a light unit configured to change a light distribution pattern of light to be emitted; and a control unit configured to receive a signal from a detection device that detects another vehicle located in front of a host vehicle and a traveling state of the another vehicle and control the light unit, in which when the another vehicle is located in front of the host vehicle and the another vehicle is traveling on a curve, the control unit forms a first region that overlaps at least a part of the another vehicle in the light distribution pattern and is darker than when the another vehicle is not located in front of the host vehicle, and forms a first shaded region and a second shaded region, the first shaded region being located on a side where the another vehicle turns with respect to the first region and adjoining at least a part of an edge of the first region, and the second shaded region being located on a side opposite to the first shaded region with respect to the first region and adjoining at least a part of an edge of the first region, and the first shaded region and the second shaded region have different shaded degrees.

In the vehicular headlight according to each of the third aspect and the fourth aspect, when the another vehicle is located in front of the host vehicle and the host vehicle or the another vehicle is traveling on a curve, the first region overlapping at least a part of the another vehicle is formed in the light distribution pattern such as a high beam light distribution pattern. The first region is a region darker than when the another vehicle is not located in front of the host vehicle. With this first region, when the another vehicle is located in front of the host vehicle, the amount of light emitted from the host vehicle to the another vehicle is reduced, suppressing glare to a driver of the another vehicle. Meanwhile, as the shaded degree of each of the first shaded region and the second shaded region is higher, the edge of the first region adjoining each of the first shaded region and the second shaded region is less noticeable and is less likely to be visually recognized by the driver of the host vehicle. When the host vehicle or the another vehicle is traveling on a curve, the first shaded region and the second shaded region generally tend to move in the left-right direction together with the first region. In this configuration, in one having a stronger shaded degree of the first shaded region and the second shaded region, it is more difficult for the driver to visually recognize a movement of the edge of the first region adjoining the one having a stronger shaded degree of the first shaded region and the second shaded region than in a case where both the first shaded region and the second shaded region have a weak shaded degree or the same shaded degree. Therefore, according to this configuration, when the host vehicle or the another vehicle is traveling on a curve, it is possible to suppress the driver of the host vehicle from feeling annoyed about the movement of the first region adjoining the one having a strong shaded degree of the first shaded region and the second shaded region.

In this case, the shaded degree of the first shaded region may be stronger than the shaded degree of the second shaded region.

For example, when the host vehicle is traveling on a curve, the driver's line of sight is directed to the side on which the host vehicle turns, and the driver tends to pay attention to the side on which the host vehicle turns. According to this configuration, it is more difficult for the driver to visually recognize a movement of the edge of the first region adjoining the first shaded region located on the side where the host vehicle turns, that is, the side on which the driver pays attention, than in a case where the first shaded region has a weaker shaded degree than the second shaded region. Therefore, according to this configuration, it is possible to prevent the driver from feeling annoyed about the movement of the edge of the first region adjoining the first shaded region located on the side where the host vehicle turns when the host vehicle is traveling on a curve.

In the vehicular headlight according to each of the third and fourth aspects, the control unit may not form the first shaded region and the second shaded region when the host vehicle and the another vehicle are traveling on the straight road.

A vehicular headlight according to a fifth aspect of the present invention includes: a light unit configured to change a light distribution pattern of light to be emitted; and a control unit configured to receive a signal from each of an object detection device that detects a predetermined object located in front of a host vehicle and a brightness detection device that detects a brightness of a surrounding environment of the host vehicle and control the light unit, in which when the predetermined object is located in front of the host vehicle, the control unit forms a first region that overlaps at least a part of the predetermined object in the light distribution pattern and is darker than when the predetermined object is not located in front of the host vehicle, and a shaded region that follows at least a part of an edge of the first region, and a shaded degree of the shaded region changes according to the brightness of the surrounding environment.

In the vehicular headlight according to the fifth aspect, the shaded degree of the shaded region changes according to the brightness of the surrounding environment of the host vehicle. Therefore, according to this vehicular headlight, it is possible to make the edge of the first region, which is a darkened region, to appear in a desired manner according to the brightness of the surrounding environment of the host vehicle. Note that the shaded degree of the shaded region is a shaded degree of brightness, and is a degree in which it is difficult to visually recognize a contrast of brightness from the first region to a region around the first region beyond the shaded region. Then, the stronger the shaded degree is, the more difficult it is to visually recognize the contrast, making a portion followed by the shaded region in the edge of the first region to appear unclear.

In the vehicular headlight according to the fifth aspect, a width of the shaded region in a direction perpendicular to a direction in which the shaded region follows the edge of the first region may change according to the brightness of the surrounding environment. The brightness of the shaded region may change according to the brightness of the surrounding environment.

The shaded degree of the shaded region changes as the width and brightness of the shaded region change.

In the vehicular headlight according to the fifth aspect, the shaded degree of the shaded region may be stronger when the brightness of the surrounding environment is lower than a predetermined brightness than when the brightness of the surrounding environment is equal to or higher than the predetermined brightness.

When the surrounding environment of the host vehicle such as a mountain area is dark, the edge of the first region tends to appear clearer than when the surrounding environment of the host vehicle such as an urban area is bright. According to the vehicular headlight of the fifth aspect, it is possible to suppress a change in how the edge of the first region appears between when where the surrounding environment is dark and when the surrounding environment is bright, suppressing the driver from feeling uncomfortable.

In the vehicular headlight according to the fifth aspect, the shaded region may include a pair of side shaded regions that follow left and right edges of the first region, respectively, and when the brightness of the surrounding environment is different between left and right sides, a shaded degree of the side shaded region located on one of the left and right sides where the brightness of the surrounding environment is low may be stronger than a shaded degree of the side shaded region located on the other side where the brightness of the surrounding environment is high.

When the brightnesses of the left and right surrounding environments are different, the dark one of the left and right edges of the first region tends to appear clearer than the bright one of the left and right edges of the first region. According to the vehicular headlight of the fifth aspect, in such a case, it is possible to suppress an occurrence of a difference in appearance between the left and right edges of the first region, suppressing the driver from feeling uncomfortable. Note that, as a case where the brightness of the surrounding environment is different between the left and right sides, for example, there may be a case with a street light where the side on which the street light is located is brighter than the side opposite to the street light.

A vehicular headlight according to a sixth aspect of the present invention includes: a light unit configured to change a light distribution pattern of light to be emitted; and a control unit configured to receive a signal from each of an object detection device that detects a predetermined object located in front of a host vehicle and a vibration sensor that detects an amplitude of vibration of the host vehicle and control the light unit, in which when the predetermined object is located in front of the host vehicle, the control unit forms a first region that overlaps at least a part of the predetermined object in the light distribution pattern and is darker than when the predetermined object is not located in front of the host vehicle, and a shaded region that follows at least a part of an edge of the first region, and a shaded degree of the shaded region becomes stronger as the amplitude of the vibration of the host vehicle is higher.

The first region is a darkened region, and when the first region vibrates, the driver tends to feel annoyed with the vibration of the first region as the amplitude of the vibration is larger. In the vehicular headlight according to the sixth aspect, the shaded degree of the shaded region becomes stronger as the amplitude of the vibration of the host vehicle is larger. Therefore, according to this vehicular headlight, the edge of the first region appears unclearer, making it possible to suppress the driver from feeling annoyed with the vibration of the first region so that the edge is less noticeable, than that when the shaded degree of the shaded region does not change. Note that the shaded degree of the shaded region is a shaded degree of brightness, and is a degree in which it is difficult to visually recognize a contrast of brightness from the first region to a region around the first region beyond the shaded region. Then, the stronger the shaded degree is, the more difficult it is to visually recognize the contrast, making a portion followed by the shaded region in the edge of the first region to appear unclear.

In the vehicular headlight according to the sixth aspect, the shaded region may include at least one of an upper shaded region following an upper edge of the first region and a lower shaded region following a lower edge of the first region.

When the host vehicle travels on an uneven road such as a gravel road, the amplitude of the vibration of the host vehicle in the up-down direction tends to be larger than the amplitude of the vibration of the host vehicle in the left-right direction. Therefore, according to this configuration, it is possible to suppress the driver from feeling annoyed with the vibration of the first region as compared with a case where the shaded region does not include the upper shaded region and the lower shaded region.

In this case, the shaded region may include at least the lower shaded region.

The upper edge of the first region tends to be located in the air as compared with the lower edge of the first region, and the lower edge of the first region tends to overlap an object such as a road or a building as compared with the upper edge of the first region. Therefore, the lower edge of the first region tends to be easier for the driver to visually recognize than the upper edge of the first region. Therefore, according to this configuration, it is possible to suppress the driver from feeling annoyed with the vibration of the first region as compared with a case where the shaded region does not include the lower shaded region.

In the vehicular headlight according to the sixth aspect, when the amplitude of the vibration of the host vehicle is lower than a predetermined value, the shaded degree of the shaded region may not be stronger. At this time, when the amplitude of the vibration of the host vehicle is lower than the predetermined value, the shaded degree of the shaded region may be zero. According to such a configuration, the shaded region may be formed when the host vehicle travels on an uneven road such as an unpaved gravel road, and the shaded region may not be formed when the host vehicle travels on a paved road.

In the vehicular headlight according to the sixth aspect, when a period for which the vibration of the host vehicle having an amplitude equal to or higher than a predetermined value continues is less than a predetermined period, or when the number of times the vibration of the host vehicle having an amplitude equal to or higher than the predetermined value is consecutively repeated is smaller than a predetermined number, the shaded degree of the shaded region may not be stronger. At this time, when a period for which the vibration of the host vehicle having an amplitude equal to or higher than a predetermined value continues is less than a predetermined period, or when the number of times the vibration of the host vehicle having an amplitude equal to or higher than the predetermined value is consecutively repeated is smaller than a predetermined number, the shaded degree of the shaded region may be zero. According to such a configuration, the shaded region may be formed when the host vehicle travels on an uneven road, and the shaded region may not be formed when the host vehicle momentarily vibrates with an amplitude equal to or higher than the predetermined value, for example, as the host vehicle passes over one bump of the road.

In the vehicular headlight according to the sixth aspect, a width of the first region in an up-down direction may be larger as the amplitude of the vibration of the host vehicle is higher.

As the amplitude of the vibration of the first region is larger, the region overlapping the predetermined object in the first region tends to be narrower. According to this configuration, it is possible to suppress the region overlapping the predetermined object in the first region from being narrow as compared with a case where the width of the first region in the up-down direction does not change. Therefore, for example, in a case where the predetermined object is another vehicle, it is possible to suppress glare to the driver of the another vehicle as compared with a case where the width of the first region in the up-down direction does not change.

### Brief Description of Drawings

[FIG. 1] FIG. 1 is a schematic view illustrating a vehicle including a vehicular headlight according to a first embodiment as a first aspect.
[FIG. 2] FIG. 2 is a cross-sectional view schematically illustrating a light part.
[FIG. 3] FIG. 3 is a front view schematically illustrating a light source unit illustrated in FIG. 2.
[FIG. 4] FIG. 4 is a flowchart of control performed by a control unit in the first embodiment.
[FIG. 5] FIG. 5 is a diagram illustrating an example of a high beam light distribution pattern.
[FIG. 6] FIG. 6 is a diagram illustrating an example of an ADB light distribution pattern, similarly to FIG. 5.
[FIG. 7] FIG. 7 is a diagram illustrating another example of an ADB light distribution pattern, similarly to FIG. 5.
[FIG. 8] FIG. 8 is a diagram illustrating an example of an ADB light distribution pattern according to a modification of the first embodiment, similarly to FIG. 5.
[FIG. 9] FIG. 9 is a part of a flowchart of control performed by a control unit in a second embodiment as a second aspect.
[FIG. 10] FIG. 10 is a diagram illustrating an example of an ADB light distribution pattern according to a modification of the second embodiment, similarly to FIG. 5.
[FIG. 11] FIG. 11 is a schematic view illustrating a vehicle including a vehicular headlight according to a third embodiment as a third aspect.
[FIG. 12] FIG. 12 is a flowchart of control performed by a control unit in the third embodiment.
[FIG. 13] FIG. 13 is a schematic view illustrating a vehicle including a vehicular headlight according to a fifth embodiment as a fifth aspect.
[FIG. 14] FIG. 14 is a flowchart of control performed by a control unit in the fifth embodiment.
[FIG. 15] FIG. 15 is a diagram illustrating an example of an ADB light distribution pattern in the fifth embodiment, similarly to FIG. 5.
[FIG. 16] FIG. 16 is a diagram illustrating another example of an ADB light distribution pattern in the fifth embodiment, similarly to FIG. 15.
[FIG. 17] FIG. 17 is a diagram illustrating an example of an ADB light distribution pattern in a sixth embodiment as a fifth aspect, similarly to FIG. 15.
[FIG. 18] FIG. 18 is a schematic view illustrating a vehicle including a vehicular headlight according to a seventh embodiment as a sixth aspect.
[FIG. 19] FIG. 19 is a flowchart of control performed by a control unit in the seventh embodiment.
[FIG. 20] FIG. 20 is a diagram illustrating an example of an ADB light distribution pattern in the seventh embodiment, similarly to FIG. 15.
[FIG. 21] FIG. 21 is a diagram illustrating another example of the ADB light distribution pattern in the seventh embodiment, similarly to FIG. 20.

### Description of Embodiments

Hereinafter, vehicular headlights according to preferred embodiments of the present invention will be described in detail with reference to the drawings. The following exemplary embodiments are intended to make it easy to understand the present invention, and are not intended to limit the present invention. The present invention can be modified and improved without departing from the gist thereof. In addition, in the present invention, components in the following exemplary embodiments may be appropriately combined. In the drawings referred to below, dimensions of members may be changed for easy understanding. In addition, in the drawings, for the sake of clarity, only some of the similar components are denoted by reference numerals, and some reference numerals may be omitted.

### (First Embodiment)

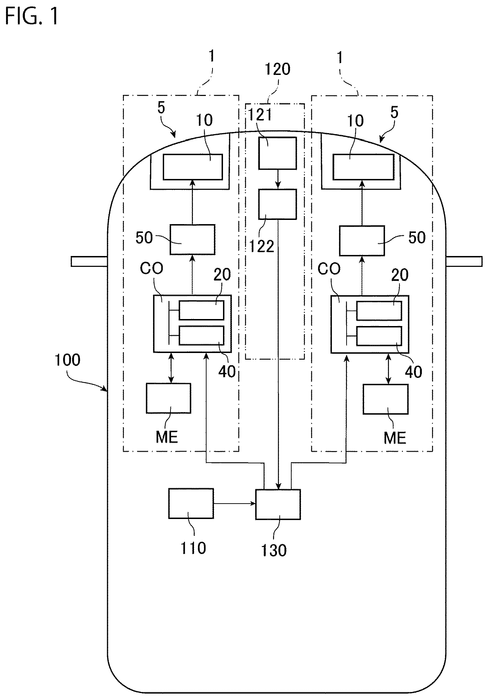

A first embodiment will be described as a first aspect of the present invention. FIG. 1 is a schematic diagram illustrating a host vehicle including a vehicular headlight according to the first embodiment. As illustrated in FIG. 1, a host vehicle 100 includes a pair of left and right vehicular headlights 1, a light switch 110, a detection device 120, and an electronic control unit (ECU) 130. In the present specification, the "right" means a right side in the forward direction of the host vehicle 100, the "left" means a left side in the forward direction of the host vehicle 100, and the driver means a driver of the host vehicle 100. The host vehicle 100 of the present embodiment is an automobile.

Each of the vehicular headlights 1 includes a light part 5, a memory ME, a control unit CO, and a power supply circuit 50. In general, the light part 5 of one vehicular headlight 1 is disposed on the left side of the front portion of the host vehicle 100, and the light part 5 of the other vehicular headlight 1 is disposed on the right side of the front portion of the host vehicle 100. The configuration of one vehicular headlight 1 is the same as the configuration of the other vehicular headlight 1 except that the shapes of the light parts 5 are generally symmetrical in the left-right direction. Therefore, one vehicular headlight 1 will be described below, and the description of the other vehicular headlight 1 will be omitted.

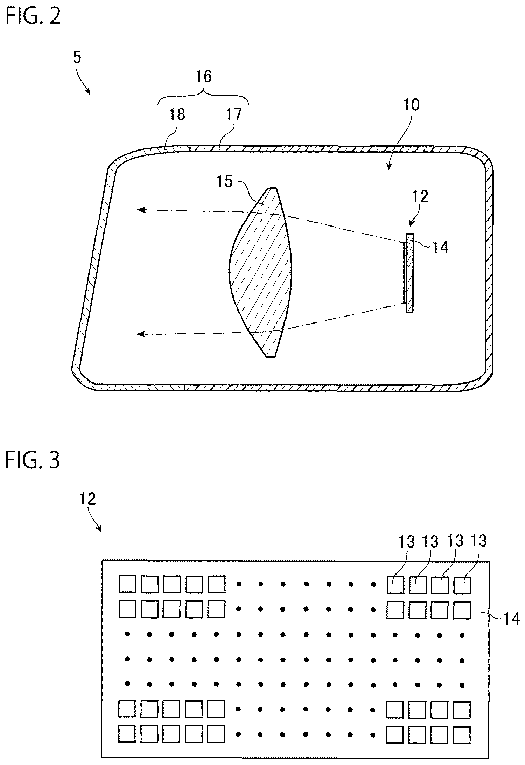

FIG. 2 is a cross-sectional view schematically illustrating the light part 5. The light part 5 includes a case 16 and a light unit 10.

The case 16 includes a housing 17 and an outer cover 18. The housing 17 is formed like a box having an opening on the front side, and the outer cover 18 is fixed to the housing 17 to close the opening. In this way, an accommodation space surrounded by the housing 17 and the outer cover 18 is formed in the case 16, and the light unit 10 is accommodated in the accommodation space. The outer cover 18 transmits light emitted from the light unit 10. The power supply circuit 50, the control unit CO, and the memory ME are disposed outside the case 16, but may be disposed in the accommodation space of the case 16.

The light unit 10 can change a light distribution pattern of the light emitted therefrom. The light distribution pattern means both a shape of an image of light formed on a virtual vertical screen, for example, 25 m ahead of the host vehicle 100 and a light intensity distribution in the image. The light unit 10 includes a light source unit 12 that emits light forward and a projection lens 15 disposed in front of the light source unit 12.

The projection lens 15 adjusts a divergence angle of light incident on the projection lens 15 from the light source unit 12. The light whose divergence angle has been adjusted by the projection lens 15 is emitted forward of the host vehicle 100 from the outer cover 18.

FIG. 3 is a front view schematically illustrating the light source unit 12 illustrated in FIG. 2. The light source unit 12 of the present embodiment includes a plurality of light emitting elements 13 as a light emitting unit that emits light forward, and a circuit board 14 on which the plurality of light emitting elements 13 is mounted. The light emitting elements 13 are arranged in a matrix and aligned in the up-down direction and the left-right direction. In the present embodiment, the light emitting elements 13 are micro light emitting diodes (LEDs), and the light source unit 12 is a so-called micro LED array. The number of light emitting elements 13 arranged in each of the left-right direction and the up-down direction is not particularly limited. The amount of light emitted from each of the light emitting elements 13 can be individually changed by the control unit CO.

In the present embodiment, each of the light emitting elements 13 corresponds to a pixel of an image generated by an image generation unit of the control unit CO to be described later. The light source unit 12 adjusts the amount of light emitted from each of the light emitting elements 13 according to data of the pixel corresponding to the light emitting element 13, thereby emitting light based on this image, and a light distribution pattern is formed based on this image by the light. In the present embodiment, the light emitting elements 13 and the pixels correspond to each other on a one-to-one basis, but are not particularly limited.

The memory ME illustrated in FIG. 1 is configured to record information and read the recorded information. The memory ME is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media, except transitory propagating signals, and does not exclude volatile recording media. Various programs for controlling the light unit 10 and information necessary for the control are stored in the memory ME, and the control unit CO reads the programs and information stored in the memory ME. Note that the memory ME may be provided inside the control unit CO.

The control unit CO includes, for example, an integrated circuit such as a microcontroller, an integrated circuit (IC), a large-scale integrated circuit (LSI), or an application specific integrated circuit (ASIC), or a numerical control (NC) device. In addition, when the NC device is used, the control unit CO may be one that uses a machine learning device or one that does not use a machine learning device. The control unit CO is electrically connected to the ECU 130, and the control units CO in the respective vehicular headlights 1 are electrically connected to each other via the ECU 130. Note that the control units CO may be electrically connected to each other in a direct manner without the ECU 130.

The control unit CO of the present embodiment includes an image generation unit 20 and a light distribution control unit 40 in a state where various programs are read from the memory ME, and receives a signal from the detection device 120 via the ECU 130.

The image generation unit 20 generates an image based on the image stored in the memory ME. In the present embodiment, the image is a grayscale image in which data for each pixel is a gray value, and a pixel having a larger gray value is brighter. However, the data for each pixel is not particularly limited. Furthermore, the information of the image may be read from a memory outside the vehicle via a wireless communication device provided in the host vehicle 100.

The image stored in the memory ME of the present embodiment is a low beam image for causing light emitted from the light source unit 12 to form a low beam light distribution pattern or a high beam image for causing light emitted from the light source unit 12 to form a high beam light distribution pattern. The image generation unit 20 of the present embodiment generates an adaptive driving beam (ADB) light distribution image by performing processing on the high beam image based on information indicated by the signal input from the detection device 120. The ADB light distribution image is an image indicating an ADB light distribution pattern in which a partial region of the high beam light distribution pattern is a first region where the amount of light is decreased, and a region adjoining at least a part of an edge of the first region is a blurry region in which the amount of light is decreased and which is brighter than the first region.

The light distribution control unit 40 of the present embodiment controls the light unit 10 by controlling the power supply circuit 50 based on any one of information of the low beam image, information of the high beam image, and information of the ADB light distribution image generated by the image generation unit 20, which are stored in the memory ME. That is, the control unit CO controls the light unit 10 using the signal from the detection device 120, the image generation unit 20, and the light distribution control unit 40.

The power supply circuit 50 includes a driver. When a control signal is input from the control unit CO to the power supply circuit 50, power supplied from a power supply (not illustrated) to each of the light emitting elements 13 of the light source unit 12 is adjusted by the driver. In this way, the amount of light emitted from each of the light emitting elements 13 is adjusted, and the light source unit 12 emits light based on the low beam image, the high beam image, or the ADB light distribution image. Then, low beam light, high beam light, or ADB light distribution pattern light is emitted from the light unit 10. Furthermore, in the present embodiment, the driver of the power supply circuit 50 adjusts the power supplied to each of the light emitting elements 13 by pulse width modulation (PWM) control, thereby adjusting the amount of light emitted from each of the light emitting elements 13. However, the method of adjusting the amount of light emitted from each of the light emitting elements 13 is not particularly limited.

The light switch 110 of the present embodiment is a switch that selects whether to emit light. Furthermore, the light switch 110 selects whether to emit low beam light or high beam light. When the light switch 110 is turned on, a signal indicating emission of the selected light is output to the control unit CO via the ECU 130 of the host vehicle 100, and when the light switch 110 is turned off, no signal is output.

The detection device 120 of the present embodiment detects another vehicle located in front of the host vehicle 100. The another vehicle may be, for example, a preceding vehicle and an oncoming vehicle. The detection device 120 of the present embodiment includes an image acquisition unit 121 and a detection unit 122.

The image acquisition unit 121 acquires an image of an area ahead of the host vehicle 100, and this image includes at least a part of a region that can be irradiated with light emitted from the pair of vehicular headlights 1. Examples of the image acquisition unit 121 include a charged coupled device (CCD) camera, a complementary metal oxide semiconductor (CMOS) camera, a light detection and ranging (LiDAR), a millimeter wave radar, and the like. The image acquisition unit 121 outputs a signal related to the acquired image to the detection unit 122.

The detection unit 122 has, for example, a configuration similar to that of the control unit CO. The detection unit 122 performs predetermined image processing on the image acquired by the image acquisition unit 121, and detects whether another vehicle is present, a position at which the another vehicle is present in the image, the type of the another vehicle, a relative relationship between the host vehicle 100 and the another vehicle, and the like from the image subjected to the image processing.

For example, when an image in which a pair of white light spots or a pair of red light spots having a luminance higher than a predetermined luminance are present at a predetermined distance in the left-right direction is input from the image acquisition unit 121, the detection unit 122 detects the presence of another vehicle. For example, when an image in which a pair of white light spots are present is input from the image acquisition unit 121, the detection unit 122 identifies another vehicle as an oncoming vehicle. In addition, when an image in which a pair of red light spots are present is input from the image acquisition unit 121, the detection unit 122 identifies another vehicle as a preceding vehicle. For example, the pair of white light spots are headlights of the oncoming vehicle, and the pair of red light spots are taillights of the preceding vehicle. Note that the method of detecting or identifying an oncoming vehicle and a preceding vehicle is not particularly limited.

The relative relationship between the host vehicle 100 and the another vehicle indicates whether the another vehicle is moving relative to the host vehicle 100. Examples of the relative movement include a case where one of the host vehicle 100 and a preceding vehicle travels on a straight road and the other vehicle travels on a curve, a case where the host vehicle 100 and a preceding vehicle travel on a straight road or a curve but the host vehicle 100 approaches or moves away from another vehicle, a case where an oncoming vehicle approaches the host vehicle 100, a case where one of the host vehicle 100 and another vehicle stops and the other vehicle travels, and the like. For example, when the amount of change in the distance between the host vehicle 100 and another vehicle acquired by the LiDAR is smaller than a threshold within a certain period of time, the detection unit 122 detects that the another vehicle is not moving relative to the host vehicle 100. When the amount of change in the distance is equal to or larger than the threshold within the certain period of time, the detection unit 122 detects that the another vehicle is moving relative to host vehicle 100. Alternatively, for example, when light spots of another vehicle such as a pair of white or red light spots are moving relative to the host vehicle 100 in the image input from the image acquisition unit 121, the detection unit 122 may detect that the another vehicle is moving relative to the host vehicle 100. In this case, the detection unit 122 detects that another vehicle is not moving relative to the host vehicle 100 when no light spots of another vehicle are moving relative to the host vehicle 100. Therefore, it can be understood that the detection unit 122 detects whether a self-luminous object is moving relative to the host vehicle 100 depending on whether a light spot of the self-luminous object is moving relative to the host vehicle 100. Such a self-luminous object may be a flashlight that emits light toward the host vehicle 100 as well as a light spot of another vehicle. By using the flashlight, it is possible to realize an experiment for detecting a relative relationship between the host vehicle 100 and another vehicle. Alternatively, for example, when a speed difference between the host vehicle 100 and another vehicle is equal to or lower than a predetermined value, the control unit CO may detect that the another vehicle is not moving relative to the host vehicle 100. In this case, for example, it is only required that information regarding a speed of each of the host vehicle 100 and another vehicle be input from the ECU 130 to the control unit CO, and the control unit CO use the information. Note that the method of detecting whether another vehicle is moving relative to the host vehicle 100 is not limited thereto.

When detecting another vehicle from the image, the detection unit 122 outputs a signal indicating information regarding the another vehicle to the control unit CO via the ECU 130. The information regarding the another vehicle includes whether another vehicle is present, a position at which the another vehicle is present in the image, the type of the another vehicle, a relative relationship between the host vehicle 100 and the another vehicle, and the like. In addition, when not detecting another vehicle, the detection unit 122 outputs a signal indicating that no other vehicle is present to the control unit CO via the ECU 130, but it is not necessary for the detection unit 122 to output such a signal.

Note that the objects detected by the detection device 120, the number of types of objects, and the configuration of the detection device 120 are not particularly limited. For example, the image acquisition unit 121 may be a CCD camera and a LiDAR, and in this case, the detection unit 122 detects another vehicles based on images acquired by the CCD camera and the LiDAR.

Next, the operation of the vehicular headlight 1 of the present embodiment will be described. In the present embodiment, the operations of the pair of vehicular headlights 1 are the same and synchronized with each other. Therefore, hereinafter, the operation of one vehicular headlight 1 will be described, and the description of the operation of the other vehicular headlight 1 will be omitted.

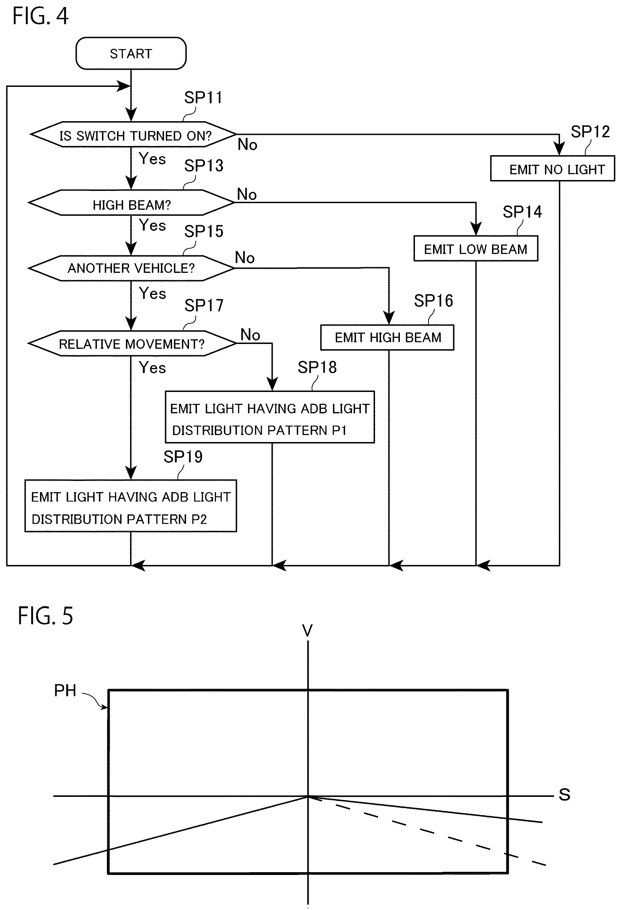

FIG. 4 is a flowchart of control performed by the control unit CO in the present embodiment. As illustrated in FIG. 4, the control flow includes steps SP11 to SP19. In the start state illustrated in FIG. 4, it is assumed that the image acquisition unit 121 of the detection device 120 acquires an image of an area ahead of the host vehicle 100, and a signal is input to the control unit CO from the detection unit 122. Another vehicle will be described as a preceding vehicle.

### (Step SP11)

In this step, when no signal is input from the light switch 110, the control unit CO advances the control flow to step SP12, and when this signal is input, the control unit CO advances the control flow to step SP13.

### (Step SP12)

In this step, the light distribution control unit 40 of the control unit CO controls the power supply circuit 50 not to emit light from the light unit 10. Accordingly, the vehicular headlight 1 emits no light. Then, the control unit CO returns the control flow to step SP11.

### (Step SP13)

In this step, when a signal related to emission of low beam light is input from the light switch 110, the control unit CO advances the control flow to step SP14. In addition, when a signal related to emission of high beam light is input from the light switch 110, the control unit CO advances the control flow to step SP15.

### (Step SP14)

In this step, the control unit CO controls the light unit 10 to emit a low beam from the vehicular headlight 1. Specifically, the image generation unit 20 reads the low beam image stored in the memory ME, and the light distribution control unit 40 controls the power supply circuit 50 based on the information of the low beam image to supply power to each of the light emitting elements 13 of the light source unit 12. By supplying the power in this manner, when a low beam is emitted, light is emitted from some of the light emitting elements 13, the light source unit 12 emits light based on the low beam image, and light having a low beam light distribution pattern is emitted from the vehicular headlight 1. In this way, the low beam is emitted from the vehicular headlight 1. Once the low beam is emitted from the vehicular headlight 1, the control unit CO returns the control flow to step SP11.

### (Step SP15)

In this step, the control unit CO advances the control flow to step SP16 when a signal indicating that no other vehicle is present is input from the detection unit 122, and advances the control flow to step SP17 when a signal indicating information regarding another vehicle is input from the detection unit 122.

### (Step SP16)

In this step, the control unit CO controls the light unit 10 to emit a high beam from the vehicular headlight 1. Specifically, the image generation unit 20 reads the high beam image stored in the memory ME, and the light distribution control unit 40 controls the power supply circuit 50 based on the information of the high beam image to supply power to each of the light emitting elements 13 of the light source unit 12. By supplying the power in this manner, the light source unit 12 emits light based on the high beam image, and light having a high beam light distribution pattern is emitted from the vehicular headlight 1. In this way, when another vehicle is not located in front of the host vehicle 100, a high beam is emitted from the vehicular headlight 1.

FIG. 5 is a diagram illustrating an example of a high beam light distribution pattern in the present embodiment. In FIG. 5, S represents a horizontal line, V represents a vertical line passing through the center of the host vehicle 100 in the left-right direction, and a high beam light distribution pattern PH formed on a virtual vertical screen disposed 25 m ahead of the host vehicle 100 is indicated by a thick line. In the present embodiment, when a high beam is emitted, light is emitted from all the light emitting elements 13, and the external shape of the high beam light distribution pattern PH is generally a horizontally-long rectangular shape. Once the high beam is emitted from the vehicular headlight 1, the control unit CO returns the control flow to step SP11.

### (Step SP17)

In this step, the control unit CO advances the control flow to step SP18 when the another vehicle is not moving relative to the host vehicle 100 based on the signal indicating information regarding the another vehicle from the detection unit 122. In addition, the control unit CO advances the control flow to step SP19 when the another vehicle is moving relative to the host vehicle 100 based on this signal.

### (Step SP18)

In this step, the control unit CO controls the light unit 10 such that the light distribution pattern of light emitted from the vehicular headlight 1 becomes an ADB light distribution pattern corresponding to a case where another vehicle is not moving relative to the host vehicle 100. When the host vehicle 100 and another vehicle travel on a straight road rather than a curve, the another vehicle is less likely to move relative to the host vehicle 100. Therefore, in this step, a case where the host vehicle 100 and another vehicle are traveling on a straight road will be described as an example.

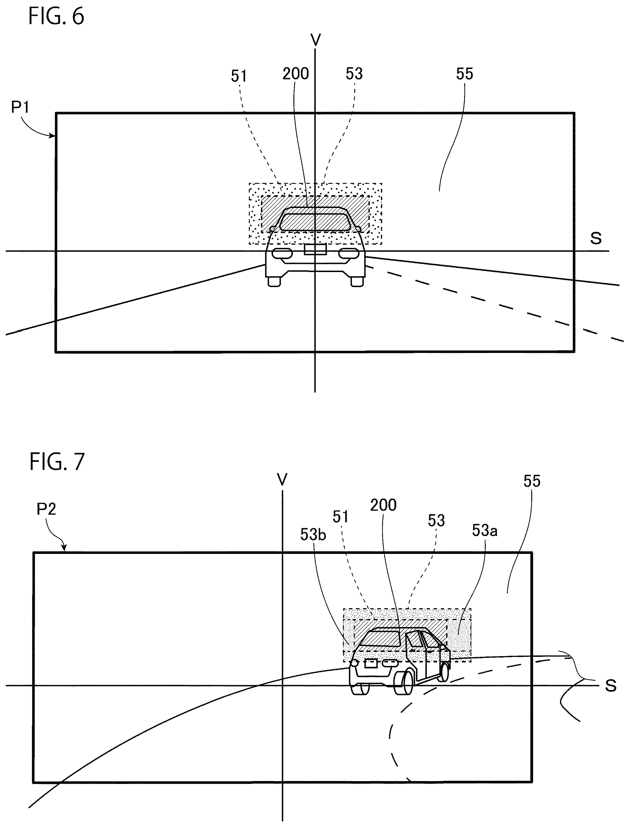

FIG. 6 is a diagram illustrating an example of an ADB light distribution pattern in this step, similarly to FIG. 5. The ADB light distribution pattern P1 in this step is a light distribution pattern in which a first region 51 and a shaded region 53 are formed in the high beam light distribution pattern PH. That is, the control unit CO controls the light unit 10 such that the first region 51 and the shaded region 53 are formed in the high beam light distribution pattern PH. The first region 51 is a region hatched with oblique lines, and the shaded region 53 is a region hatched with a plurality of dots. For the sake of clarity, an edge of each of the regions is indicated by a broken line.

The first region 51 overlaps at least a part of another vehicle 200 in the high beam light distribution pattern PH, and is dark as compared with a case where the another vehicle 200 is not located in front of the host vehicle 100. That is, the amount of light in the first region 51 is smaller than an amount of light in a region corresponding to the first region 51 of the high beam light distribution pattern PH. Therefore, according to the vehicular headlight 1 of the present embodiment, it is possible to reduce the amount of light irradiated to the another vehicle 200 from the host vehicle 100, suppressing glare to a driver of the another vehicle 200. Note that the first region 51 of the present embodiment is a light shielding region that is not irradiated with light, but is not limited thereto. In the example illustrated in FIG. 6, the first region 51 has a rectangular shape overlapping a portion above the license plate of the another vehicle 200. However, from the viewpoint of suppressing glare to the driver of the another vehicle 200, it is only required that the first region 51 overlap at least a part of a visible portion for the driver of the another vehicle 200 to view the outside of the vehicle. For example, the first region 51 may overlap the whole of the another vehicle 200, and the shape and size of the first region 51 are not limited. Note that the visible portion is, for example, a side mirror, a rear window, an imaging device that images an area behind the vehicle, or the like in a case where the another vehicle 200 is a preceding vehicle, and is, for example, a front window in a case where the another vehicle 200 is an oncoming vehicle. The visible portion generally tends to be disposed above the license plate.

The shaded region 53 is a region that adjoins at least a part of an edge of the first region 51 in the high beam light distribution pattern PH, is dark as compared with a case where the another vehicle 200 is not located in front of the host vehicle 100, and is brighter than the first region 51. The shaded region 53 follows the edge of the first region 51. Since the shaded region 53 follows the edge of the first region 51, it is more difficult for the driver to visually recognize a contrast of brightness from the first region 51 to a second region 55 that is a region around the first region 51, making the edge of the first region 51 to appear unclearer, as compared with that in a case where no shaded region 53 is provided. This makes the edge less noticeable and less visible to the driver. Therefore, the driver is suppressed from feeling uncomfortable about the change in brightness between the first region 51 and the second region 55 around the first region 51. In the example illustrated in FIG. 6, the shaded region 53 adjoins the edge of the first region 51 over the entire circumference of the edge of the first region 51. In addition, the shaded region 53 may follow at least a part of the edge of the first region 51. Therefore, the shaded region 53 is formed in at least a part of a boundary region between the first region 51 and the second region 55. In the present embodiment, the width of the shaded region 53 in a direction perpendicular to a direction in which the shaded region 53 follows the edge of the first region 51 is generally constant in the direction along the edge of the first region 51, but the width may not be constant in the direction along the edge of the first region 51. Furthermore, in the present embodiment, the brightness of the shaded region 53 becomes darker toward the first region 51, and gradually brighter from the first region 51 side toward the side opposite to the first region 51, and such a change in brightness is generally the same in the direction along the edge of the first region 51, but is not limited thereto. In this step, the shaded region 53 may not be formed.

The amount of light in the second region 55 does not change as compared with the amount of light in a region corresponding to the second region 55 of the high beam light distribution pattern PH. As a result, even when the another vehicle 200 is located in front of the host vehicle 100, a decrease in visibility of the driver of the host vehicle 100 with respect to the second region 55 is suppressed.

In order to control light to have such an ADB light distribution pattern P1, in the present embodiment, the image generation unit 20 first reads the high beam image stored in the memory ME. Next, the image generation unit 20 generates an ADB light distribution image indicating an ADB light distribution pattern P1 by performing processing on the high beam image based on information regarding the another vehicle 200 input from the detection device 120. The processing on the high beam image by the image generation unit 20 is processing in which a region corresponding to the first region 51 and a region corresponding to the shaded region 53 in the high beam image are darkened, and the brightness of the region corresponding to the shaded region 53 is brighter than the brightness of the region corresponding to the first region 51. By processing the high beam image in this manner, the image generation unit 20 generates an ADB light distribution image in which the brightness of some parts of the high beam image are changed. Next, based on the information of the generated ADB light distribution image, the light distribution control unit 40 controls the power supply circuit 50 to emit light based on the ADB light distribution image from the light source unit 12. As a result, light having the ADB light distribution pattern P1 is emitted from the vehicular headlight 1. Then, the control unit CO returns the control flow to step SP11.

### (Step SP19)

In this step, the control unit CO controls the light unit 10 such that the light distribution pattern of light emitted from the vehicular headlight 1 becomes an ADB light distribution pattern corresponding to a case where the another vehicle 200 is moving relative to the host vehicle 100. Note that when the host vehicle 100 and the another vehicle 200 travel on a curve rather than a straight road, the another vehicle 200 is more likely to move relative to the host vehicle 100. Therefore, in this step, a case where the host vehicle 100 and the another vehicle 200 travel on a curve will be described as an example. In this case, it is assumed that the another vehicle 200 is moving to the right relative to the host vehicle 100.

FIG. 7 is a diagram illustrating an example of an ADB light distribution pattern P2 in this step, similarly to FIG. 5. The first region 51 and the shaded region 53 are also formed in the ADB light distribution pattern P2 in this step.

The position, amount of light, shape, and size of the first region 51 are the same as those described in step SP18.

The shaded region 53 in this step is different from the shaded region 53 in step SP18. Specifically, the shaded degree of the shaded region 53 is stronger than the shaded degree of the shaded region 53 in step SP18. The shaded degree of the shaded region 53 is a shaded degree of brightness, and is a degree in which it is difficult to visually recognize a contrast of brightness from the first region 51 to the second region 55 that is a region around the first region 51 beyond the shaded region 53. Then, the stronger the shaded degree is, the more difficult it is to visually recognize the contrast, making a portion followed by the shaded region 53 in the edge of the first region 51 to appear unclear. Examples of the method of changing the shaded degree include changing the brightness of the shaded region 53 and changing the width of the shaded region 53. Furthermore, in a case where the brightness of the shaded region 53 gradually increases from the first region 51 side toward the side opposite to the first region 51, the shaded degree of the shaded region 53 can be changed by changing the number of stages of the change in brightness.

Since the shaded degree has changed, the portion followed by the shaded region 53 in the edge of the first region 51 in step SP18 appears in a different manner from the portion followed by the shaded region 53 in the edge of the first region 51 in this step. In the present embodiment, the control unit CO forms a first shaded region 53a and a second shaded region 53b in the shaded region 53. The first shaded region 53a is a region located on the moving direction side of the another vehicle 200 with respect to the first region 51 in the direction in which the another vehicle 200 moves with respect to the host vehicle 100. On the other hand, the second shaded region 53b is a region located on the side opposite to the first shaded region 53a side with respect to the first region 51, that is, on the side opposite to the moving direction side of the another vehicle 200. The first shaded region 53a is wider in a horizontal direction than a region corresponding to the first shaded region 53a of the shaded region 53 in step SP18. As a result, the shaded degree of the shaded region 53 is stronger than the shaded degree of the shaded region 53 in step SP18. The second shaded region 53b has the same width in the horizontal direction as the region corresponding to the second shaded region 53b of the shaded region 53 in step SP18, but may have a larger width.

In the present embodiment, the first shaded region 53a has a different width in the horizontal direction from the second shaded region 53b. As a result, the first shaded region 53a and the second shaded region 53b have different shaded degrees. The first shaded region 53a and the second shaded region 53b may have the same shaded degree.

In the present embodiment, the first shaded region 53a is wider in the horizontal direction than the second shaded region 53b. As a result, the first shaded region 53a has a stronger shaded degree than the second shaded region 53b. According to this configuration, it is possible to suppress the driver from feeling uncomfortable about the change in brightness between the first region 51 and the second region 55 around the first region 51 in the first shaded region 53a, and the portion followed by the shaded region in the edge of the first region 51 appears unclearer than that in a case where the first shaded region 53a does not have a stronger shaded degree than the second shaded region 53b.

The first shaded region 53a may have a weaker shaded degree than the second shaded region 53b. In this case, for example, it is only required that the first shaded region 53a have a smaller width in the horizontal direction than the second shaded region 53b.

In order to control light to have such an ADB light distribution pattern P2, similarly to the control of light to have an ADB light distribution pattern P1 in step SP18, the image generation unit 20 reads the high beam image stored in the memory ME. Next, the image generation unit 20 generates an ADB light distribution image indicating an ADB light distribution pattern P2 by performing processing on the high beam image based on information regarding the another vehicle 200 input from the detection device 120. Next, based on the information of the generated ADB light distribution image, the light distribution control unit 40 controls the power supply circuit 50 to emit light based on the ADB light distribution image from the light source unit 12. Therefore, light having the ADB light distribution pattern P2 is emitted from the vehicular headlight 1.

When the light of the ADB light distribution pattern P2 is emitted from the vehicular headlight 1, the control unit CO returns the control flow to step SP11.

In this way, in the vehicular headlight 1 of the present embodiment, when the emission of the high beam light is selected by the light switch 110, the light distribution pattern of the emitted light changes depending on whether the another vehicle is moving relative to the host vehicle 100.

Meanwhile, in Patent Literature 1 described above, the traveling states of the host vehicle and another vehicle are not considered. When the another vehicle is not moving relative to the host vehicle, a light shielding region does not move as viewed from the driver of the host vehicle. Examples of such a traveling state include a case where the host vehicle travels on a straight road, which is a roadway for traveling straight, and the another vehicle is a preceding vehicle traveling in front of the host vehicle. However, for example, when at least one of the host vehicle and the another vehicle travels on a curve and the another vehicle is moving relative to the host vehicle, a darkened region such as a light shielding region moves as viewed from the driver of the host vehicle. When the host vehicle travels on a curve, the darkened region generally tends to move. When the darkened region moves, the darkened region is easy for the driver to visually recognize, and the driver may feel annoyed about the movement of the darkened region, as compared with a case where the darkened region does not move.

Therefore, in the present embodiment as the first aspect, as described in steps SP15, SP17, and SP19, when the another vehicle 200 is moving relative to the host vehicle 100, the shaded degree of the shaded region 53 is stronger than when one of the host vehicle 100 and the another vehicle 200 does not move relative to the other.

As the shaded degree of the shaded region 53 is stronger, the edge of the first region 51 adjoining the shaded region 53 is less noticeable, and is less likely to be visually recognized by the driver of the host vehicle 100. When the another vehicle 200 is moving relative to the host vehicle 100, the shaded region 53 is moving together with the first region 51, but in the vehicular headlight 1, the shaded degree of the shaded region 53 is stronger than when the another vehicle 200 is not moving relative to the host vehicle 100. Therefore, in this configuration, it is more difficult for the driver to visually recognize a movement of the edge of the first region 51 adjoining the shaded region 53 than in a case where the another vehicle 200 is moving relative to the host vehicle 100 in a state where the shaded degree of the shaded region 53 is the same as the shaded degree of the shaded region 53 in a case where the another vehicle 200 does not move relative to the host vehicle 100. Therefore, according to this configuration, when the another vehicle 200 is moving relative to the host vehicle 100, it is possible to suppress the driver from feeling annoyed about the movement of the first region 51 adjoining the shaded region 53.

In the present embodiment as the first aspect, in order to change the shaded degrees of the first shaded region 53a and the second shaded region 53b, the widths of the first shaded region 53a and the second shaded region 53b are changed, but the present invention is not limited thereto. For example, the first shaded region 53a may have the same width as the second shaded region 53b. In this case, while each of the first shaded region 53a and the second shaded region 53b has a larger amount of light as being further away from the edge of the first region 51, it is only required that the amount of light more finely increase in one of the first shaded region 53a and the second shaded region 53b than in the other. As a result, the shaded degrees of the first shaded region 53a and the second shaded region 53b change. For example, when the amount of light more finely increases in the first shaded region 53a than in the second shaded region 53b, the first shaded region 53a has a stronger shaded degree than the second shaded region 53b. In a case where the another vehicle 200 is a preceding vehicle, a region other than the first shaded region 53a and the second shaded region 53b in the shaded region 53 may not be formed.

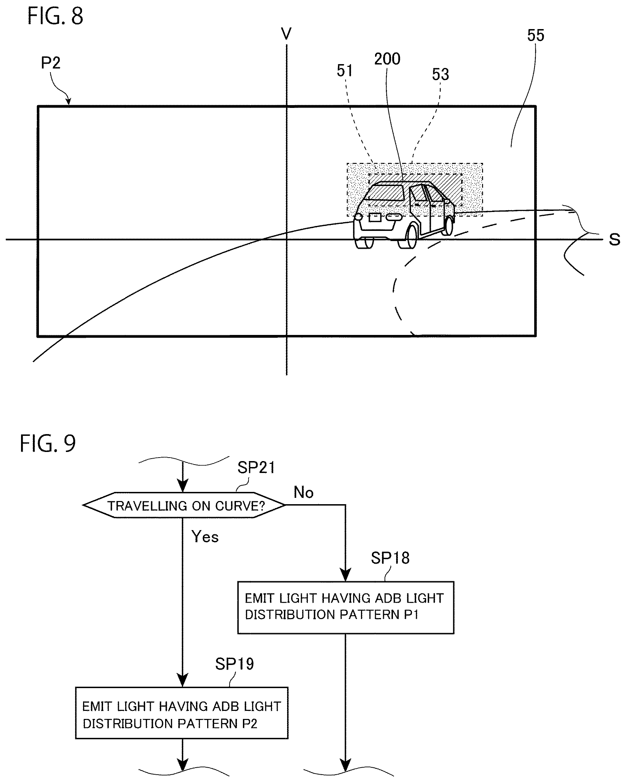

Next, a modification of the present embodiment as the first aspect will be described. FIG. 8 is a diagram illustrating an example of an ADB light distribution pattern P2 in step SP19 in the present modification, similarly to FIG. 5. In the present modification as well, the shaded degree of the shaded region 53 is stronger than the shaded degree of the shaded region 53 in step SP18. In the present modification, the width of the shaded region 53 in the left-right direction is different from that in the embodiment. In the present modification, when the another vehicle 200 is moving relative to the host vehicle 100, the control unit CO increases the width of the shaded region 53 in the left-right direction of the host vehicle 100.

According to this configuration, as compared with a case where the width of the shaded region 53 does not increase, it is possible to suppress the driver from feeling uncomfortable when the shaded region 53 becomes sharply brighter from the first region 51 outward of the first region 51 in the left-right direction. Note that the configuration of the present modification is not an essential configuration.

### (Second Embodiment)

Next, a second embodiment will be described in detail as a second aspect of the present invention. Note that the components that are identical or equivalent to those in the first embodiment will be denoted by the same reference numerals, and redundant description will be omitted unless otherwise specified.

The detection unit 122 of the present embodiment further detects a traveling state of the another vehicle 200. The traveling state of the another vehicle 200 indicates whether the another vehicle 200 is traveling on a straight road or on a curve. In the traveling state of the another vehicle 200, for example, the detection unit 122 detects the traveling state of the another vehicle 200 based on a lane boundary line or a curved degree of a center line captured by a camera. Alternatively, for example, the detection unit 122 detects that the another vehicle 200 is traveling on a straight road when the amount of change in the left-right deviation of the position at which the another vehicle 200 is present in the image is smaller than a threshold within a certain period of time. In this case, when the amount of change in deviation is equal to or larger than the threshold within the certain period of time, the detection unit 122 detects that the another vehicle 200 is traveling on a curve. Alternatively, as another detection method, first, the detection unit 122 receives an image from the image acquisition unit 121 at regular time intervals, and superimposes the image at each lapse of time. Then, in a case where a trajectory of a light spot of the another vehicle 200 such as a pair of white or red light spots in each superimposed image draws a curve, the detection unit 122 detects that the another vehicle 200 is traveling on the curve. In this case, when the trajectory does not draw a curve, the detection unit 122 detects that the another vehicle 200 is not traveling on the curve. Therefore, it can be understood that the detection unit 122 detects whether a self-luminous object is traveling on a curve depending on whether a trajectory of a light spot of the self-luminous object draws a curve. Such a self-luminous object may be a flashlight that emits light toward the host vehicle 100 as well as a light spot of the another vehicle 200. By using the flashlight, it is possible to realize an experiment for detecting a traveling state of the another vehicle 200. Alternatively, when the position of the another vehicle 200 is shifted to the left or right from the front of the host vehicle 100 in the image from the image acquisition unit 121, the detection unit 122 may detect that the another vehicle 200 is traveling on a curve. Note that the method of detecting a traveling state of the another vehicle 200 by the detection unit 122 is not limited thereto.

The detection device 120 of the present embodiment further includes a steering sensor. The steering sensor detects a steering angle of the host vehicle 100, for example, from a rotation angle of a steering wheel of the host vehicle 100. The steering sensor detects a right steering angle and a left steering angle while identifying the right steering angle and the left steering angle as different steering angles. When the steering angle is equal to or larger than 0° and equal to or smaller than a reference steering angle, the host vehicle 100 travels on a straight road. The steering angle of the steering when the host vehicle 100 travels straight is 0°, the reference steering angle is, for example, 3°. When the steering angle is larger than the reference steering angle, the host vehicle 100 travels on a curve. The steering sensor outputs a signal indicating the detected steering angle to the control unit CO via the ECU 130. The control unit CO detects the traveling state of the host vehicle 100 according to the signal from the steering sensor. The traveling state in the present embodiment indicates whether the host vehicle 100 is traveling on a straight road or on a curve. In this manner, the detection device 120 further detects a traveling state of the host vehicle 100.

The detection of the traveling state of the host vehicle 100 is not limited to the signal from the steering sensor. For example, the control unit CO may detect the traveling state of the host vehicle 100 from current position information of the host vehicle 100 detected based on a global positioning system (GPS) signal transmitted from a GPS satellite and map information recorded in the memory ME. The control unit CO detects the traveling state of the host vehicle 100 by determining whether the current position coordinates of the host vehicle 100 are located on a straight road or a curve in the map information. Alternatively, the control unit CO may detect the traveling state of the host vehicle 100 based on a lane boundary line or a curved degree of a center line captured by a camera.

Next, an operation of the vehicular headlight 1 of the present embodiment will be described. In the present embodiment, a part of a flowchart of control performed by the control unit CO is different from that in the first embodiment. FIG. 9 is a part of a flowchart of control performed by the control unit CO in the present embodiment, and step SP17 in the first embodiment is changed to step SP21. In the start state of the present embodiment, it is assumed that a signal is further input to the control unit CO from the steering sensor.

### (Step SP21)

In this step, the control unit CO advances the control flow to step SP18 when the host vehicle 100 and the another vehicle 200 are traveling on a straight road based on signals from the steering sensor and the detection device 120. The ADB light distribution pattern described in step SP18 and FIG. 6 is a light distribution pattern corresponding to a case where the host vehicle 100 and the another vehicle 200 are traveling on a straight road. Based on these signals, the control unit CO advances the control flow to step SP19 when at least one of the host vehicle 100 and the another vehicle 200 is traveling on a curve. The ADB light distribution pattern described in step SP19 and FIG. 7 is a light distribution pattern corresponding to a case where the host vehicle 100 and the another vehicle 200 travel on a curve. Note that the ADB light distribution pattern described in step SP19 and FIG. 7 is also a light distribution pattern corresponding to a case where the host vehicle 100 or the another vehicle 200 travels on a curve. Therefore, the light distribution pattern corresponding to the case where at least one of the host vehicle 100 and the another vehicle 200 travels on a curve is the ADB light distribution pattern described in step SP19 and FIG. 7.

In the present embodiment, as described in steps SP15, SP21, and SP19, when the host vehicle 100 and the another vehicle 200 travel on a curve, the shaded degree of the shaded region 53 is stronger than when the host vehicle 100 and the another vehicle 200 travel on a straight road.

When the host vehicle 100 and the another vehicle 200 travel on a curve, the first region 51 and the shaded region 53 generally tend to move. In this case, in the vehicular headlight 1, the shaded degree of the shaded region 53 is stronger than in a case where the host vehicle 100 and the another vehicle 200 travel on a straight road. Therefore, in this configuration, it is more difficult for the driver to visually recognize a movement of the edge of the first region 51 adjoining the shaded region 53 than in a case where at least one of the host vehicle 100 and the another vehicle 200 travels on a curve in a state where the shaded degree of the shaded region 53 is the same as the shaded degree of the shaded region 53 when the host vehicle 100 and the another vehicle 200 travel on a straight road. Therefore, according to this configuration, when the host vehicle 100 travels on a curve, it is possible to suppress the driver from feeling annoyed about the movement of the first region 51 adjoining the shaded region 53.

In step SP19 of the present embodiment, the control unit CO forms a first shaded region 53a and a second shaded region 53b in the shaded region 53. The first shaded region 53a of the present embodiment is a region located on the side where the host vehicle 100 turns with respect to the first region 51 in the left-right direction of the host vehicle 100 traveling on a curve. On the other hand, the second shaded region 53b is a region located on the side opposite to the first shaded region 53a with respect to the first region 51, that is, on the turning side of the host vehicle 100.

In the present embodiment as well, the first shaded region 53a and the second shaded region 53b have different shaded degrees.

In this configuration, in one having a stronger shaded degree of the first shaded region 53a and the second shaded region 53b, it is more difficult for the driver to visually recognize a movement of the edge of the first region 51 adjoining the one having a stronger shaded degree of the first shaded region 53a and the second shaded region 53b that in a case where both the shaded regions 53a and 53b have a weak shaded degree or the same shaded degree. Therefore, according to this configuration, when the host vehicle 100 is traveling on a curve, it is possible to suppress the driver of the host vehicle 100 from feeling annoyed about the movement of the first region 51 adjoining the one having a strong shaded degree of the first shaded region 53a and the second shaded region 53b. The first shaded region 53a and the second shaded region 53b may have the same shaded degree.

In the present embodiment as well, the first shaded region 53a has a stronger shaded degree than the second shaded region 53b.

When the host vehicle 100 is traveling on a curve, the driver's line of sight is directed to the side on which the host vehicle 100 turns, and the driver tends to pay attention to the side on which the host vehicle turns. According to this configuration, it is more difficult for the driver to visually recognize a movement of the edge of the first region 51 adjoining the first shaded region 53a located on the side where the host vehicle 100 turns, that is, the side on which the driver pays attention, than in a case where the first shaded region 53a has a weaker shaded degree than the second shaded region 53b. Therefore, according to this configuration, it is possible to prevent the driver from feeling annoyed about the movement of the first region 51 adjoining the first shaded region 53a located on the side where the host vehicle 100 turns when the host vehicle 100 is traveling on a curve. The first shaded region 53a may have a weaker shaded degree than the second shaded region 53b. In this case, for example, it is only required that the first shaded region 53a have a smaller width than the second shaded region 53b.

In addition, in the present embodiment, it has been described an example that the host vehicle 100 and the another vehicle 200 travel on a curve as illustrated in FIG. 7. However, the host vehicle 100 may travel on a curve and the another vehicle 200 may travel on a straight road, or the host vehicle 100 may travel on a straight road and the another vehicle 200 may travel on a curve. Therefore, it is only required that at least one of the host vehicle 100 and the another vehicle 200 travel on a curve.

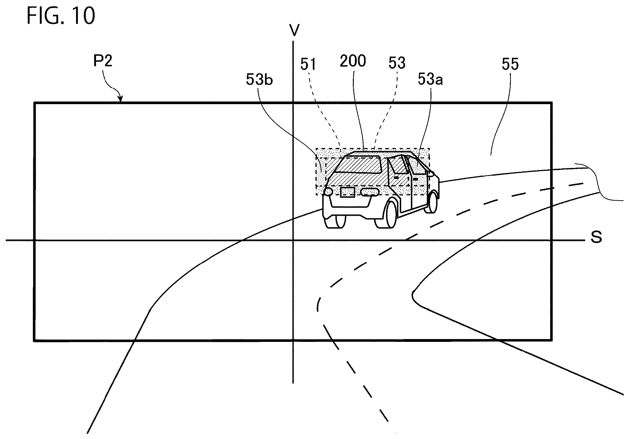

Next, a modification of the present embodiment will be described. FIG. 10 is a diagram illustrating an example of an ADB light distribution pattern P2 in step SP19 in the present modification, similarly to FIG. 5. In step SP19, it has been described an example that the host vehicle 100 and the another vehicle 200 travel on a curve, but the present modification is different in that the host vehicle 100 travels on a straight road and the another vehicle 200 travels on a curve. In the present modification as well, the control unit CO forms the shaded regions 53a and 53b in the shaded region 53. The shaded regions 53a and 53b of the embodiment are located on the side where the host vehicle 100 traveling on the curve turns and on the side opposite to the turning side. However, the shaded regions 53a and 53b of the present modification are located on the side where the another vehicle 200 traveling on the curve turns and on the side opposite to the shaded region 53a. That is, the first shaded region 53a is a region located on the side where the another vehicle 200 turns with respect to the first region 51 in the left-right direction of the another vehicle 200 traveling on the curve. In addition, the second shaded region 53b is a region located on the side opposite to the side where the another vehicle 200 turns with respect to the first region 51 in the left-right direction. In the present modification, when the host vehicle 100 travels on a straight road and the another vehicle 200 travels on a curve, the shaded degrees of the first shaded region 53a and the second shaded region 53b are stronger than when the host vehicle 100 and the another vehicle 200 travel on a straight road.

According to this configuration, it is more difficult for the driver to visually recognize a movement of the edge of the first region 51 adjoining the first shaded region 53a and a movement of the edge of the first region 51 adjoining the second shaded region 53b, which are movements in the same direction as the another vehicle 200, than in a case where the host vehicle 100 and the another vehicle 200 travel on a straight road. Therefore, according to this configuration, it is possible to suppress the driver from feeling annoyed about the movements of these edges. Note that one of the first shaded region 53a and the second shaded region 53b may have a stronger shaded degree than the other. Furthermore, in the present modification, the host vehicle 100 may travel on a curve, and the another vehicle 200 may travel on a straight road. Furthermore, in the present modification, one of the host vehicle 100 and the another vehicle 200 may travel on a curve, and the other may travel on a curve steeper than the curve on which one of the host vehicle and the another vehicle is traveling. The configuration of the present modification is not an essential configuration.

Although the first and second aspects of the present invention have been described by taking the first and second embodiments as examples, but the first and second aspects of the present invention are not limited thereto.

When a light spot of a self-luminous object such as another vehicle 200 or a flashlight detected by the detection device 120 is located in front of the host vehicle 100, the control unit CO may form a first region 51 that overlaps at least a part of the self-luminous object in the ADB light distribution pattern P1 and becomes dark as compared with a case where no light spot is detected, and when the light spot is moving relative to the host vehicle 100, the control unit CO may form a shaded region 53 adjoining at least a part of an edge of the first region 51 for causing shading. In addition, when the light spot is moving relative to the host vehicle 100, the shaded degree of the shaded region 53 may be stronger than when the light spot does not move relative to the host vehicle 100.

For example, the first shaded region 53a and the second shaded region 53b may also be formed in step SP18. In this case, for example, the first shaded region 53a is, for example, a region located to the right of the first region 51, and the second shaded region 53b is, for example, a region located to the left of the first region 51. The first shaded region 53a and the second shaded region 53b have different widths, and the first shaded region 53a and the second shaded region 53b have different shaded degrees. One of the first shaded region 53a and the second shaded region 53b may be wider than the other, and one of the first shaded region 53a and the second shaded region 53b may have a stronger shaded degree than the other. Alternatively, the first shaded region 53a and the second shaded region 53b may have the same shaded degree of step SP18. Alternatively, the first shaded region 53a and the second shaded region 53b may not be formed in step SP18.

For example, in the first and second embodiments, it has been described as an example that the first region 51 and the shaded region 53 are formed in the high beam light distribution pattern PH. However, the light distribution pattern in which these regions are formed is not limited, and for example, these regions may be formed in an additional light distribution pattern that is added to a low beam light distribution pattern to form a high beam light distribution pattern PH. In this case, low beam light is emitted from a light unit different from the light unit 10, and the light unit 10 emits light having an additional light distribution pattern.

In the first and second embodiments, it has been described as an example that the control unit CO includes an image generation unit 20 and controls the light unit 10 based on an ADB image generated by the image generation unit 20. However, the control unit CO does not need to include the image generation unit 20. In this case, for example, information regarding an ADB light distribution pattern according to a predetermined object may be stored in the memory ME in advance, and the control unit CO may control the light unit 10 based on the information.

Furthermore, in the first and second embodiments, it has been described as an example that the light source unit 12 includes a plurality of light emitting elements 13 capable of individually changing the amount of light emitted therefrom. However, the light source unit 12 is not limited. For example, the light source unit 12 may include a digital mirror device (DMD) including a plurality of reflective elements arranged in a matrix and a light emitting unit that irradiates the DMD with light. The DMD can adjust the amount of light emitted in a predetermined direction from a reflective surface of each of the reflective elements, such that the light emitted in the predetermined direction from each of the reflective elements can be light based on the image generated by the image generation unit 20. In this case, it can be understood that the reflective surface of each of the reflective elements corresponds to a light emitting unit capable of individually changing the amount of light to be emitted.

In the first and second embodiments, it has been described as an example that the another vehicle is a preceding vehicle. However, even when the another vehicle is an oncoming vehicle, the control unit CO performs the same control. At least one of the control unit CO and the memory ME may be shared by the pair of vehicular headlights 1. In addition, a signal output from the detection device 120 may be input to the control unit CO without passing through the ECU 130. In addition, the host vehicle in which the vehicular headlights 1 are provided, the number of vehicular headlights 1 provided in the host vehicle, and the like are not particularly limited.

### (Third Embodiment)

Next, a third embodiment will be described as a third aspect of the present invention. Note that the components that are identical or equivalent to those in the first embodiment will be denoted by the same reference numerals, and redundant description will be omitted unless otherwise specified.

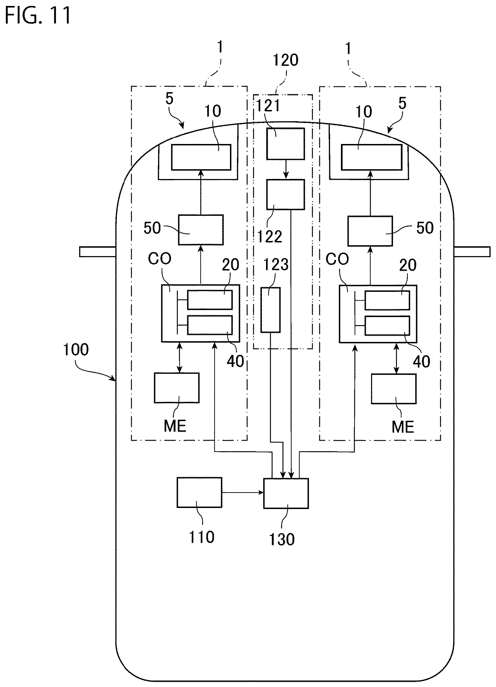

FIG. 11 is a schematic diagram illustrating a host vehicle including a vehicular headlight according to the third embodiment. As illustrated in FIG. 11, the detection device 120 of the present embodiment is different from the detection device 120 of the first embodiment in that a steering sensor 123 is further included.

The steering sensor 123 detects a steering angle of the host vehicle 100, for example, from a rotation angle of a steering wheel of the host vehicle 100. The steering sensor 123 detects a right steering angle and a left steering angle while identifying the right steering angle and the left steering angle as different steering angles. When the steering angle is equal to or larger than 0° and equal to or smaller than a reference steering angle, the host vehicle 100 travels on a straight road which is a roadway for traveling straight. The steering angle of the steering when the host vehicle 100 travels straight is 0°, the reference steering angle is, for example, 3°. When the steering angle is larger than the reference steering angle, the host vehicle 100 travels on a curve. The steering sensor 123 outputs a signal indicating the detected steering angle to the control unit CO via the ECU 130. The control unit CO detects the traveling state of the host vehicle 100 according to the signal from the steering sensor 123. The traveling state in the present embodiment indicates whether the host vehicle 100 is traveling on a straight road or on a curve. In this manner, the detection device 120 further detects a traveling state of the host vehicle 100.

The detection of the traveling state of the host vehicle 100 is not limited to the signal from the steering sensor 123. For example, the control unit CO may detect the traveling state of the host vehicle 100 from current position information of the host vehicle 100 detected based on a global positioning system (GPS) signal transmitted from a GPS satellite and map information recorded in the memory ME. The control unit CO detects the traveling state of the host vehicle 100 by determining whether the current position coordinates of the host vehicle 100 are located on a straight road or a curve in the map information. Alternatively, the control unit CO may detect the traveling state of the host vehicle 100 based on a lane boundary line or a curved degree of a center line captured by a camera.

Next, the operation of the vehicular headlight 1 of the present embodiment will be described. In the present embodiment, the operations of the pair of vehicular headlights 1 are the same and synchronized with each other. Therefore, hereinafter, the operation of one vehicular headlight 1 will be described, and the description of the operation of the other vehicular headlight 1 will be omitted.

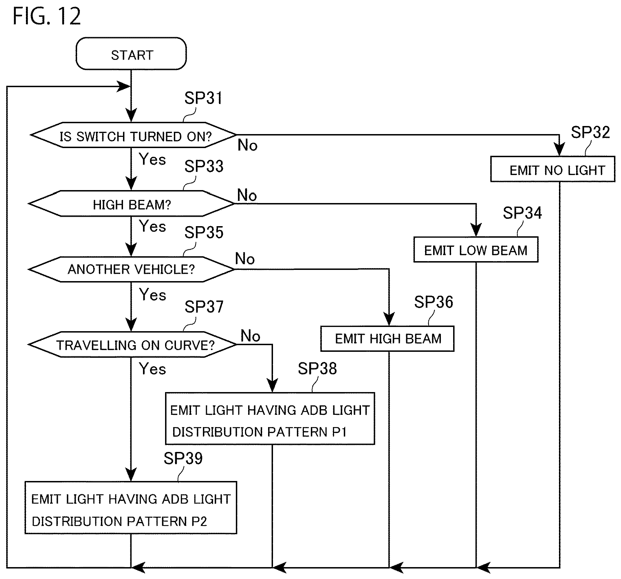

FIG. 12 is a flowchart of control performed by the control unit CO in the present embodiment. As illustrated in FIG. 12, the control flow includes steps SP31 to SP39. In the start state illustrated in FIG. 12, it is assumed that the image acquisition unit 121 of the detection device 120 acquires an image of an area ahead of the host vehicle 100, and a signal is input to the control unit CO from the detection unit 122. In addition, in the start state, it is assumed that a signal is further input to the control unit CO from the steering sensor 123. Another vehicle will be described as a preceding vehicle. In addition, steps SP31 to SP36 are similar to steps SP11 to SP16 in the first embodiment. Therefore, the description of steps SP31 to SP36 will be omitted.

### (Step SP37)

In this step, the control unit CO advances the control flow to step SP38 when the host vehicle 100 is traveling on a straight road based on the signal from the steering sensor 123. In addition, the control unit CO advances the control flow to step SP39 when the host vehicle 100 is traveling on a curve based on this signal.

### (Step SP38)

In this step, the control unit CO controls the light unit 10 such that the light distribution pattern of the light emitted from the vehicular headlight 1 becomes an ADB light distribution pattern corresponding to a case where the host vehicle 100 is traveling on a straight road. In this step, a case where another vehicle is also traveling on the straight road will be described as an example.

An example of an ADB light distribution pattern in this step is a light distribution pattern similar to the ADB light distribution pattern P1 illustrated in FIG. 6. This will be described with reference to FIG. 6. The ADB light distribution pattern P1 in this step is a light distribution pattern in which the first region 51 and the shaded region 53 are formed in the high beam light distribution pattern PH. That is, the control unit CO controls the light unit 10 such that the first region 51 and the shaded region 53 are formed in the high beam light distribution pattern PH. The first region 51 is a region hatched with oblique lines, and the shaded region 53 is a region hatched with a plurality of dots. For the sake of clarity, an edge of each of the regions is indicated by a broken line.

The first region 51 overlaps at least a part of another vehicle 200 in the high beam light distribution pattern PH, and is dark as compared with a case where the another vehicle 200 is not located in front of the host vehicle 100. That is, the amount of light in the first region 51 is smaller than an amount of light in a region corresponding to the first region 51 of the high beam light distribution pattern PH. Therefore, according to the vehicular headlight 1 of the present embodiment, it is possible to reduce the amount of light irradiated to the another vehicle 200 from the host vehicle 100, suppressing glare to a driver of the another vehicle 200. Note that the first region 51 of the present embodiment is a light shielding region that is not irradiated with light, but is not limited thereto. In the example illustrated in FIG. 6, the first region 51 has a rectangular shape overlapping a portion above the license plate of the another vehicle 200. However, from the viewpoint of suppressing glare to the driver of the another vehicle 200, it is only required that the first region 51 overlap at least a part of a visible portion for the driver of the another vehicle 200 to view the outside of the vehicle. For example, the first region 51 may overlap the whole of the another vehicle 200, and the shape and size of the first region 51 are not limited.

The shaded region 53 is a region that adjoins at least a part of an edge of the first region 51 in the high beam light distribution pattern PH, is dark as compared with a case where the another vehicle 200 is not located in front of the host vehicle 100, and is brighter than the first region 51. The shaded region 53 follows the edge of the first region 51. Since the shaded region 53 follows the edge of the first region 51, it is more difficult for the driver to visually recognize a contrast of brightness from the first region 51 to a second region 55 that is a region around the first region 51, making the edge of the first region 51 to appear unclearer, as compared with that in a case where no shaded region 53 is provided. This makes the edge less noticeable and less visible to the driver. Therefore, the driver is suppressed from feeling uncomfortable about the change in brightness between the first region 51 and the second region 55 around the first region 51. In the example illustrated in FIG. 6, the shaded region 53 adjoins the edge of the first region 51 over the entire circumference of the edge of the first region 51. In addition, the shaded region 53 may follow at least a part of the edge of the first region 51. Therefore, the shaded region 53 is formed in at least a part of a boundary region between the first region 51 and the second region 55. In the present embodiment, the width of the shaded region 53 in a direction perpendicular to a direction in which the shaded region 53 follows the edge of the first region 51 is generally constant in the direction along the edge of the first region 51, but the width may not be constant in the direction along the edge of the first region 51. Furthermore, in the present embodiment, the brightness of the shaded region 53 becomes darker toward the first region 51, and gradually brighter from the first region 51 side toward the side opposite to the first region 51, and such a change in brightness is generally the same in the direction along the edge of the first region 51, but is not limited thereto. In this step, the shaded region 53 may not be formed.

The amount of light in the second region 55 does not change as compared with the amount of light in a region corresponding to the second region 55 of the high beam light distribution pattern PH. As a result, even when the another vehicle 200 is located in front of the host vehicle 100, a decrease in visibility of the driver of the host vehicle 100 with respect to the second region 55 is suppressed.

In order to control light to have such an ADB light distribution pattern P1, in the present embodiment, the image generation unit 20 first reads the high beam image stored in the memory ME. Next, the image generation unit 20 generates an ADB light distribution image indicating an ADB light distribution pattern P1 by performing processing on the high beam image based on information regarding the another vehicle 200 input from the detection device 120. The processing on the high beam image by the image generation unit 20 is processing in which a region corresponding to the first region 51 and a region corresponding to the shaded region 53 in the high beam image are darkened, and the brightness of the region corresponding to the shaded region 53 is brighter than the brightness of the region corresponding to the first region 51. By processing the high beam image in this manner, the image generation unit 20 generates an ADB light distribution image in which the brightness of some parts of the high beam image are changed. Next, based on the information of the generated ADB light distribution image, the light distribution control unit 40 controls the power supply circuit 50 to emit light based on the ADB light distribution image from the light source unit 12. As a result, light having the ADB light distribution pattern P1 is emitted from the vehicular headlight 1. Then, the control unit CO returns the control flow to step SP31.

### (Step SP39)

In this step, the control unit CO controls the light unit 10 such that the light distribution pattern of the light emitted from the vehicular headlight 1 becomes an ADB light distribution pattern corresponding to a case where the host vehicle 100 is traveling on a curve. In this step, a case where the another vehicle 200 also travels on a curve and the host vehicle 100 and the another vehicle 200 are traveling around the right will be described as an example.

An example of an ADB light distribution pattern in this step is a light distribution pattern similar to the ADB light distribution pattern P2 illustrated in FIG. 7. This will be described with reference to FIG. 7. The first region 51 and the shaded region 53 are also formed in the ADB light distribution pattern P2 in this step.

The position, amount of light, shape, and size of the first region 51 are the same as those described in step SP38.

The shaded region 53 in this step is different from the shaded region 53 in step SP38. Specifically, the shaded degree of the shaded region 53 is stronger than the shaded degree of the shaded region 53 in step SP38.

Since the shaded degree has changed, the portion followed by the shaded region 53 in the edge of the first region 51 in step SP38 appears in a different manner from the portion followed by the shaded region 53 in the edge of the first region 51 in this step. In the present embodiment, the control unit CO forms a first shaded region 53a and a second shaded region 53b in the shaded region 53. The first shaded region 53a is a region located on the side where the host vehicle 100 turns with respect to the first region 51. On the other hand, the second shaded region 53b is a region located on the side opposite to the first shaded region 53a side with respect to the first region 51, that is, on the side opposite to the side on which the host vehicle 100 turns. The first shaded region 53a is wider in a horizontal direction than a region corresponding to the first shaded region 53a of the shaded region 53 in step SP38. As a result, the shaded degree of the shaded region 53 is stronger than the shaded degree of the shaded region 53 in step SP38. The second shaded region 53b has the same width in the horizontal direction as the region corresponding to the second shaded region 53b of the shaded region 53 in step SP38, but may have a larger width.

In the present embodiment, the first shaded region 53a has a different width in the horizontal direction from the second shaded region 53b. As a result, the first shaded region 53a and the second shaded region 53b have different shaded degrees.

In the present embodiment, the first shaded region 53a is wider in the horizontal direction than the second shaded region 53b. As a result, the first shaded region 53a has a stronger shaded degree than the second shaded region 53b. According to this configuration, it is possible to suppress the driver from feeling uncomfortable about the change in brightness between the first region 51 and the second region 55 around the first region 51 in the first shaded region 53a, and the portion followed by the shaded region in the edge of the first region 51 appears unclearer than that in a case where the first shaded region 53a does not have a stronger shaded degree than the second shaded region 53b.

The first shaded region 53a may have a weaker shaded degree than the second shaded region 53b. In this case, for example, it is only required that the first shaded region 53a have a smaller width in the horizontal direction than the second shaded region 53b.

When the host vehicle 100 is traveling on a curve, the driver's line of sight is directed to the side on which the host vehicle 100 turns, and the driver tends to pay attention to the side on which the host vehicle turns. According to this configuration, it is more difficult for the driver to visually recognize a movement of the edge of the first region 51 adjoining the first shaded region 53a located on the side where the host vehicle 100 turns, that is, the side on which the driver pays attention, than in a case where the first shaded region 53a has a weaker shaded degree than the second shaded region 53b. Therefore, according to this configuration, it is possible to prevent the driver from feeling annoyed about the movement of the first region 51 adjoining the first shaded region 53a located on the side where the host vehicle 100 turns when the host vehicle 100 is traveling on a curve. The first shaded region 53a may have a weaker shaded degree than the second shaded region 53b. In this case, for example, it is only required that the first shaded region 53a have a smaller width than the second shaded region 53b.

In order to control light to have such an ADB light distribution pattern P2, similarly to the control of light to have an ADB light distribution pattern P1 in step SP38, the image generation unit 20 reads the high beam image stored in the memory ME. Next, the image generation unit 20 generates an ADB light distribution image indicating an ADB light distribution pattern P2 by performing processing on the high beam image based on the traveling state of the host vehicle 100 input from the detection device 120. Next, based on the information of the generated ADB light distribution image, the light distribution control unit 40 controls the power supply circuit 50 to emit light based on the ADB light distribution image from the light source unit 12. Therefore, light having the ADB light distribution pattern P2 is emitted from the vehicular headlight 1.

When the light of the ADB light distribution pattern P2 is emitted from the vehicular headlight 1, the control unit CO returns the control flow to step SP31.

In this way, in the vehicular headlight 1 of the present embodiment, when the emission of the high beam light is selected by the light switch 110, the light distribution pattern of the emitted light changes according to the traveling state of the host vehicle 100.

Meanwhile, in Patent Literature 1 described above, the traveling state of the host vehicle or another vehicle is not considered. For example, when the host vehicle or another vehicle travels on a curve, a darkened region such as a light shielding region generally tends to move. When the darkened region moves, the darkened region is easy for the driver to visually recognize, and the driver may feel annoyed about the movement of the darkened region, as compared with a case where the darkened region does not move.

Therefore, in the present embodiment as the third aspect, as described in step SP39, when another vehicle is located in front of the host vehicle 100 and the host vehicle 100 is traveling on a curve, the control unit CO forms a first region 51, a first shaded region 53a, and a second shaded region 53b, and the first shaded region 53a and the second shaded region 53b have different shaded degrees.

As the shaded degree of each of the first shaded region 53a and the second shaded region 53b is higher, the edge of the first region 51 adjoining each of the first shaded region 53a and the second shaded region 53b is less noticeable and is less likely to be visually recognized by the driver of the host vehicle 100. When the host vehicle 100 is traveling on a curve, the first shaded region 53a and the second shaded region 53b generally tend to move in the left-right direction together with the first region 51. In this configuration, in one having a stronger shaded degree of the first shaded region 53a and the second shaded region 53b, it is more difficult for the driver to visually recognize a movement of the edge of the first region 51 adjoining the one having a stronger shaded degree of the first shaded region 53a and the second shaded region 53b than in a case where both the first shaded region 53a and the second shaded region 53b have a weak shaded degree or the same shaded degree. Therefore, according to this configuration, when the host vehicle 100 is traveling on a curve, it is possible to suppress the driver of the host vehicle 100 from feeling annoyed about the movement of the first region 51 adjoining the one having a strong shaded degree of the first shaded region 53a and the second shaded region 53b.

In the present embodiment, in order to change the shaded degrees of the first shaded region 53a and the second shaded region 53b, the widths of the first shaded region 53a and the second shaded region 53b are changed, but the present invention is not limited thereto. For example, the first shaded region 53a may have the same width as the second shaded region 53b. In this case, while each of the first shaded region 53a and the second shaded region 53b has a larger amount of light as being further away from the edge of the first region 51, it is only required that the amount of light more finely increase in one of the first shaded region 53a and the second shaded region 53b than in the other. As a result, the shaded degrees of the first shaded region 53a and the second shaded region 53b change. For example, when the amount of light more finely increases in the first shaded region 53a than in the second shaded region 53b, the first shaded region 53a has a stronger shaded degree than the second shaded region 53b. In a case where the another vehicle 200 is a preceding vehicle, a region other than the first shaded region 53a and the second shaded region 53b in the shaded region 53 may not be formed.

Next, a modification of the present embodiment will be described. An example of an ADB light distribution pattern P2 in step SP39 in the present modification is a light distribution pattern similar to the ADB light distribution pattern P2 illustrated in FIG. 8. This will be described with reference to FIG. 8. In the present modification as well, the shaded degree of the shaded region 53 is stronger than the shaded degree of the shaded region 53 in step SP38. In the present modification, the width of the shaded region 53 in the left-right direction is different from that in the embodiment. In the present modification, when the host vehicle 100 is traveling on a curve, the control unit CO increases the width of the shaded region 53 in the left-right direction of the host vehicle 100.

According to this configuration, as compared with a case where the width of the shaded region 53 does not increase, it is possible to suppress the driver from feeling uncomfortable when the shaded region 53 becomes sharply brighter from the first region 51 outward of the first region 51 in the left-right direction. Note that the configuration of the present modification is not an essential configuration.

### (Fourth Embodiment)

Next, a fourth embodiment will be described in detail as a fourth aspect of the present invention. Note that the components that are identical or equivalent to those in the third embodiment will be denoted by the same reference numerals, and redundant description will be omitted unless otherwise specified.

The detection unit 122 of the present embodiment further detects a traveling state of the another vehicle 200. The traveling state of the another vehicle 200 indicates whether the another vehicle 200 is traveling on a straight road or on a curve. In the traveling state of the another vehicle 200, for example, the detection unit 122 detects the traveling state of the another vehicle 200 based on a lane boundary line or a curved degree of a center line captured by a camera. Alternatively, for example, the detection unit 122 detects that the another vehicle 200 is traveling on a straight road when the amount of change in the left-right deviation of the position at which the another vehicle 200 is present in the image is smaller than a threshold within a certain period of time. In this case, when the amount of change in deviation is equal to or larger than the threshold within the certain period of time, the detection unit 122 detects that the another vehicle 200 is traveling on a curve. Alternatively, as another detection method, first, the detection unit 122 receives an image from the image acquisition unit 121 at regular time intervals, and superimposes the image at each lapse of time. Then, in a case where a trajectory of a light spot of the another vehicle 200 such as a pair of white or red light spots in each superimposed image draws a curve, the detection unit 122 detects that the another vehicle 200 is traveling on the curve. In this case, when the trajectory does not draw a curve, the detection unit 122 detects that the another vehicle 200 is not traveling on the curve. Therefore, it can be understood that the detection unit 122 detects whether a self-luminous object is traveling on a curve depending on whether a trajectory of a light spot of the self-luminous object draws a curve. Such a self-luminous object may be a flashlight that emits light toward the host vehicle 100 as well as a light spot of the another vehicle 200. By using the flashlight, it is possible to realize an experiment for detecting a traveling state of the another vehicle 200. Alternatively, when the position of the another vehicle 200 is shifted to the left or right from the front of the host vehicle 100 in the image from the image acquisition unit 121, the detection unit 122 may detect that the another vehicle 200 is traveling on a curve. Note that the method of detecting a traveling state of the another vehicle 200 by the detection unit 122 is not limited thereto.

Next, an operation of the vehicular headlight 1 of the present embodiment will be described. In the present embodiment, step SP37 of the control performed by the control unit CO is different from that in the third embodiment. In step SP37 of the third embodiment, the control unit CO divides the control flow into cases depending on the traveling state of the host vehicle 100 based on the signal from the steering sensor 123. However, in step SP37 of the present embodiment, the control unit CO divides the control flow into cases depending on the traveling state of the another vehicle 200 based on the signal from the detection device 120.

### (Step SP37)

In this step, the control unit CO advances the control flow to step SP38 when the another vehicle 200 is traveling on a straight road based on the signal from the detection device 120. The ADB light distribution pattern described in step SP38 and FIG. 6 is a light distribution pattern corresponding to a case where the another vehicle 200 is traveling on a straight road. The control unit CO advances the control flow to step SP39 when the another vehicle 200 is traveling on a curve based on the signal from the detection device 120. The ADB light distribution pattern described in step SP39 and FIG. 7 is a light distribution pattern corresponding to a case where the another vehicle 200 is traveling on a curve.

In step SP39 of the present embodiment, the first shaded region 53a is a region located on the side where the another vehicle 200 turns with respect to the first region 51 in the left-right direction of the another vehicle 200 traveling on the curve. On the other hand, the second shaded region 53b is a region located on the side opposite to the first region 51 with respect to the first region 51, that is, on the side where the another vehicle 200 turns.

In the present embodiment, as described in steps SP37 and SP39, when the another vehicle 200 is located in front of the host vehicle 100 and the another vehicle 200 is traveling on a curve, the control unit CO forms a first region 51, a first shaded region 53a, and a second shaded region 53b, and the first shaded region 53a and the second shaded region 53b have different shaded degrees.

In this configuration as well, in one having a stronger shaded degree of the first shaded region 53a and the second shaded region 53b, it is more difficult for the driver to visually recognize a movement of the edge of the first region 51 adjoining the one having a stronger shaded degree of the first shaded region 53a and the second shaded region 53b than in a case where both the shaded regions 53a and 53b have a weak shaded degree or the same shaded degree. Therefore, according to this configuration, when the another vehicle 200 is traveling on a curve, it is possible to suppress the driver of the host vehicle 100 from feeling annoyed about the movement of the first region 51 adjoining the one having a strong shaded degree of the first shaded region 53a and the second shaded region 53b.

Although the third and fourth aspects of the present invention have been described above by taking the third and fourth embodiments as examples, the third and fourth embodiments of the present invention are not limited thereto.

When a light spot of a self-luminous object such as another vehicle 200 or a flashlight detected by the detection device 120 is located in front of the host vehicle 100 and the host vehicle 100 or the self-luminous object is traveling on a curve, the control unit CO may form a first shaded region 53a and a second shaded region 53b, while forming a first region 51 that overlaps at least a part of the self-luminous object in the ADB light distribution pattern P1 and becomes dark as compared with a case where no light spot is detected.

For example, the first shaded region 53a and the second shaded region 53b may also be formed in step SP38. In this case, for example, the first shaded region 53a is, for example, a region located to the right of the first region 51, and the second shaded region 53b is, for example, a region located to the left of the first region 51. The first shaded region 53a and the second shaded region 53b have different widths, and the first shaded region 53a and the second shaded region 53b have different shaded degrees. One of the first shaded region 53a and the second shaded region 53b may be wider than the other, and one of the first shaded region 53a and the second shaded region 53b may have a stronger shaded degree than the other. Alternatively, the first shaded region 53a and the second shaded region 53b may have the same shaded degree of step SP38. Alternatively, the first shaded region 53a and the second shaded region 53b may not be formed in step SP38.

For example, in the third and fourth embodiments, it has been described as an example that the first region 51 and the shaded region 53 are formed in the high beam light distribution pattern PH. However, the light distribution pattern in which these regions are formed is not limited, and for example, these regions may be formed in an additional light distribution pattern that is added to a low beam light distribution pattern to form a high beam light distribution pattern PH. In this case, low beam light is emitted from a light unit different from the light unit 10, and the light unit 10 emits light having an additional light distribution pattern.

In the third and fourth embodiments, it has been described as an example that the control unit CO includes an image generation unit 20 and controls the light unit 10 based on an ADB image generated by the image generation unit 20. However, the control unit CO does not need to include the image generation unit 20. In this case, for example, information regarding an ADB light distribution pattern according to a predetermined object may be stored in the memory ME in advance, and the control unit CO may control the light unit 10 based on the information.

Furthermore, in the third and fourth embodiments, it has been described as an example that the light source unit 12 includes a plurality of light emitting elements 13 capable of individually changing the amount of light emitted therefrom. However, the light source unit 12 is not limited. For example, the light source unit 12 may include a digital mirror device (DMD) including a plurality of reflective elements arranged in a matrix and a light emitting unit that irradiates the DMD with light. The DMD can adjust the amount of light emitted in a predetermined direction from a reflective surface of each of the reflective elements, such that the light emitted in the predetermined direction from each of the reflective elements can be light based on the image generated by the image generation unit 20. In this case, it can be understood that the reflective surface of each of the reflective elements corresponds to a light emitting unit capable of individually changing the amount of light to be emitted.

In the third and fourth embodiments, it has been described as an example that the another vehicle is a preceding vehicle. However, even when the another vehicle is an oncoming vehicle, the control unit CO performs the same control. At least one of the control unit CO and the memory ME may be shared by the pair of vehicular headlights 1. In addition, a signal output from the detection device 120 may be input to the control unit CO without passing through the ECU 130. In addition, the host vehicle in which the vehicular headlights 1 are provided, the number of vehicular headlights 1 provided in the host vehicle, and the like are not particularly limited.

### (Fifth Embodiment)

Next, a fifth embodiment will be described as a fifth aspect of the present invention. Note that the components that are identical or equivalent to those in the first embodiment will be denoted by the same reference numerals, and redundant description will be omitted unless otherwise specified.

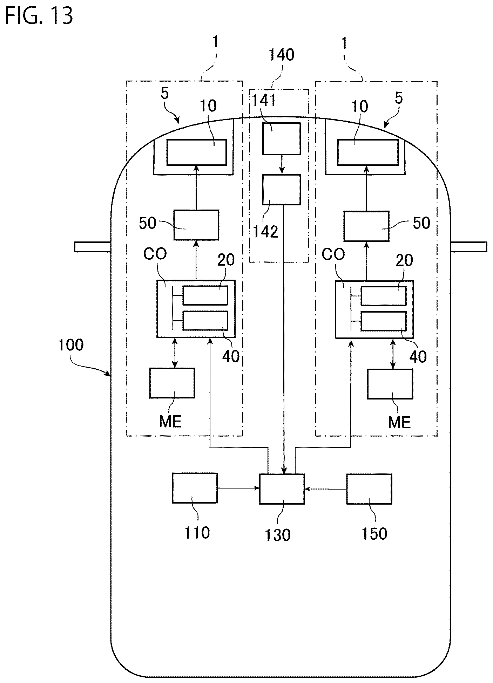

FIG. 13 is a schematic diagram illustrating a host vehicle including a vehicular headlight according to the present embodiment. As illustrated in FIG. 13, the host vehicle 100 of the present embodiment is mainly different from the host vehicle 100 of the first embodiment in that an object detection device 140 is provided instead of the detection device 120 and a brightness detection device 150 is further provided.

In addition, the image generation unit 20 of the present embodiment generates an adaptive driving beam (ADB) light distribution image by performing processing on the high beam image based on information indicated by the signal input from each of the object detection device 140 and the brightness detection device 150. The ADB light distribution image is an image indicating an ADB light distribution pattern in which a partial region of the high beam light distribution pattern is a first region where the amount of light is decreased, and a region following at least a part of an edge of the first region is a blurry region in which the amount of light is decreased and which is brighter than the first region.

In the present embodiment, as described above, the image generation unit 20 generates an image based on the information indicated by the signal input from each of the object detection device 140 and the brightness detection device 150. Therefore, the control unit CO receives a signal from each of the object detection device 140 and the brightness detection device 150 and controls the light unit 10 using the image generation unit 20 and the light distribution control unit 40.

The object detection device 140 of the present embodiment detects a predetermined object located in front of the host vehicle 100. Examples of the predetermined object include another vehicle such as a preceding vehicle or an oncoming vehicle, a retroreflective object, and a human such as a pedestrian. The retroreflective object of the present embodiment is an object that does not emit light by itself and retroreflects emitted light at a predetermined spreading angle, and examples of the retroreflective object include a road sign, a visual guidance sign, and the like. The object detection device 140 of the present embodiment includes an image acquisition unit 141 and a detection unit 142.

The image acquisition unit 141 acquires an image of an area ahead of the host vehicle 100, and this image includes at least a part of a region that can be irradiated with light emitted from the pair of vehicular headlights 1. Examples of the image acquisition unit 141 include a charged coupled device (CCD) camera, a complementary metal oxide semiconductor (CMOS) camera, a light detection and ranging (LiDAR), a millimeter wave radar, and the like. The image acquisition unit 141 outputs a signal related to the acquired image to the detection unit 142.

The detection unit 142 has, for example, a configuration similar to that of the control unit CO. The detection unit 142 performs predetermined image processing on the image acquired by the image acquisition unit 141, and detects whether a predetermined object is present, a position at which the object is present in the image, the type of the object, and the like from the image subjected to the image processing.

When detecting a predetermined object from the image, the detection unit 142 outputs a signal indicating information regarding the object to the control unit CO via the ECU 130. The information regarding the predetermined object includes the presence of the object, the position at which the object is present in the image, the type of the object, and the like. In addition, when detecting no predetermined object, the detection unit 142 outputs a signal indicating that no predetermined object is present to the control unit CO via the ECU 130, but it is not necessary for the detection unit 142 to output such a signal.

Note that the predetermined object detected by the object detection device 140, the number of types of the objects, and the configuration of the object detection device 140 are not particularly limited. For example, the image acquisition unit 141 may be a CCD camera and a LiDAR, and in this case, the detection unit 142 detects predetermined objects based on images acquired by the CCD camera and the LiDAR. In addition, the method of detecting a predetermined object by the detection unit 142 is not limited. For example, when information of an image in which a pair of white light spots or a pair of red light spots having a luminance higher than a predetermined luminance are present at a predetermined distance in the left-right direction is input from the image acquisition unit 141, the detection unit 142 detects presence of another vehicle as a predetermined object and a position of the presence from the light spots. For example, when information of an image in which a pair of white light spots are present is input from the image acquisition unit 141, the detection unit 142 identifies another vehicle as an oncoming vehicle. In addition, when information of an image in which a pair of red light spots are present is input from the image acquisition unit 141, the detection unit 142 identifies another vehicle as a preceding vehicle. For example, the pair of white light spots are headlights of the oncoming vehicle, and the pair of red light spots are taillights of the preceding vehicle.

The brightness detection device 150 of the present embodiment detects a brightness of a surrounding environment of the host vehicle 100 and outputs a signal indicating the detected brightness to the control unit CO via the ECU 130. Examples of the brightness detection device 150 include an illuminance sensor exposed to the outside of the host vehicle 100, a device including a camera that acquires an image around the host vehicle 100 and a brightness detection unit, and the like. For example, the brightness detection unit has a configuration similar to that of the control unit CO to perform predetermined image processing on the image acquired by the camera, and detect a brightness of a surrounding environment of the host vehicle 100 from the image subjected to the image processing. Furthermore, the camera may be a camera serving as the image acquisition unit 141 of the object detection device 140.

Next, the operation of the vehicular headlight 1 of the present embodiment will be described. In the present embodiment, the operations of the pair of vehicular headlights 1 are the same and synchronized with each other. Therefore, hereinafter, the operation of one vehicular headlight 1 will be described, and the description of the operation of the other vehicular headlight 1 will be omitted.

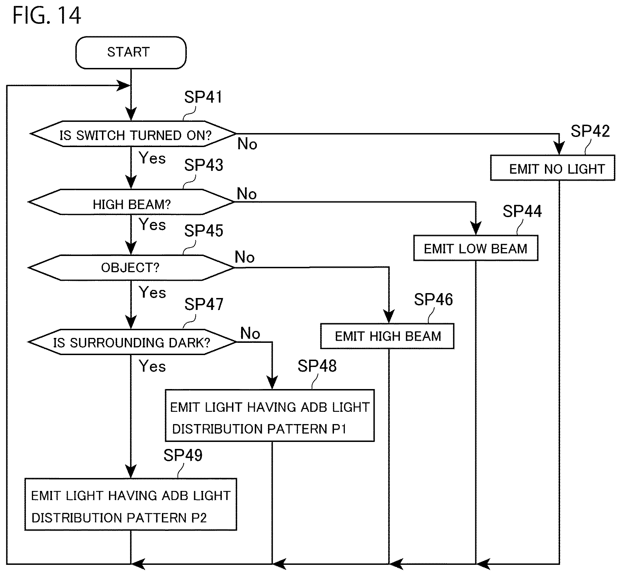

FIG. 14 is a flowchart of control performed by the control unit CO in the present embodiment. As illustrated in FIG. 14, the control flow includes steps SP41 to SP49. In the start state illustrated in FIG. 14, it is assumed that a signal is input to the control unit CO from each of the object detection device 140 and the brightness detection device 150. In addition, steps SP41 to SP44 are similar to steps SP11 to SP14 in the first embodiment. Therefore, the description of steps SP41 to SP44 will be omitted.

### (Step SP45)

In this step, the control unit CO advances the control flow to step SP46 when a signal indicating that no predetermined object is present is input from the object detection device 140, and advances the control flow to step SP47 when a signal indicating information regarding the predetermined object is input from the object detection device 140.

### (Step SP46)

In this step, the control unit CO controls the light unit 10 to emit a high beam from the vehicular headlight 1. Specifically, the image generation unit 20 reads the high beam image stored in the memory ME, and the light distribution control unit 40 controls the power supply circuit 50 based on the information of the high beam image to supply power to each of the light emitting elements 13 of the light source unit 12. By supplying the power in this manner, the light source unit 12 emits light based on the high beam image, and light having a high beam light distribution pattern is emitted from the vehicular headlight 1. In this way, when another vehicle is not located in front of the host vehicle 100, a high beam is emitted from the vehicular headlight 1.

An example of a high beam light distribution pattern in the present embodiment is similar to the high beam light distribution pattern PH illustrated in FIG. 5. In the present embodiment, when a high beam is emitted, light is emitted from all the light emitting elements 13, and the external shape of the high beam light distribution pattern PH is generally a horizontally-long rectangular shape. Once the high beam is emitted from the vehicular headlight 1, the control unit CO returns the control flow to step SP41.

### (Step SP47)

In this step, when a signal indicating a brightness lower than a predetermined brightness is input from the brightness detection device 150, the control unit CO advances the control flow to step SP49. In addition, when a signal indicating a brightness equal to or higher than the predetermined brightness is input from the brightness detection device 150, the control unit CO advances the control flow to step SP48. In the present embodiment, the predetermined brightness is set to a brightness such that the control flow proceeds to step SP48 when the surrounding environment of the host vehicle 100 such as a mountain area is dark, and the control flow proceeds to step SP49 when the surrounding environment of the host vehicle 100 such as an urban area is bright.

### (Step SP48)

In this step, the control unit CO controls the light unit 10 such that the light distribution pattern of the light emitted from the vehicular headlight 1 becomes an ADB light distribution pattern corresponding to a case where the surrounding environment of the host vehicle 100 is equal to or higher than the predetermined brightness. Hereinafter, a case where the predetermined object is another vehicle will be described as an example.

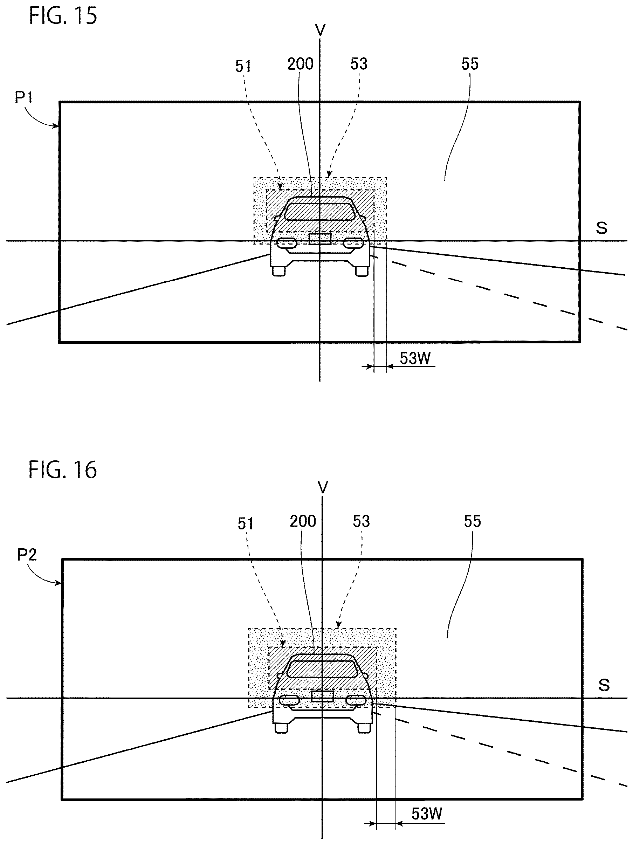

FIG. 15 is a diagram illustrating an example of an ADB light distribution pattern in this step, similarly to FIG. 5. The ADB light distribution pattern P1 in this step is a light distribution pattern in which the first region 51 and the shaded region 53 are formed in the high beam light distribution pattern PH. That is, the control unit CO controls the light unit 10 such that the first region 51 and the shaded region 53 are formed in the high beam light distribution pattern PH. In FIG. 15, for the sake of clarity, the first region 51 is hatched with oblique lines, the shaded region 53 is hatched with a plurality of dots, and an edge of each of the regions is indicated by a broken line.

The first region 51 overlaps at least a part of another vehicle 200 in the high beam light distribution pattern PH, and is dark as compared with a case where the another vehicle 200 is not located in front of the host vehicle 100. That is, the amount of light in the first region 51 is smaller than an amount of light in a region corresponding to the first region 51 of the high beam light distribution pattern PH. Therefore, according to the vehicular headlight 1 of the present embodiment, it is possible to reduce the amount of light irradiated to the another vehicle 200 from the host vehicle 100, suppressing glare to a driver of the another vehicle 200. Note that the first region 51 of the present embodiment is a light shielding region that is not irradiated with light, but is not limited thereto. In the example illustrated in FIG. 15, the first region 51 has a rectangular shape overlapping a portion above the license plate of the another vehicle 200. However, from the viewpoint of suppressing glare to the driver of the another vehicle 200, it is only required that the first region 51 overlap at least a part of a visible portion for the driver of the another vehicle 200 to view the outside of the vehicle. For example, the first region 51 may overlap the whole of the another vehicle 200, and the shape and size of the first region 51 are not limited.

The shaded region 53 is a region following at least a part of an edge of the first region 51 in the high beam light distribution pattern PH, is dark as compared with a case where the another vehicle 200 is not located in front of the host vehicle 100, and is brighter than the first region 51. Since the shaded region 53 follows the edge of the first region 51, it is more difficult for the driver to visually recognize a contrast of brightness from the first region 51 to a second region 55 that is a region around the first region 51, making the edge of the first region 51 to appear unclearer, as compared with that in a case where no shaded region 53 is provided. This makes the edge less noticeable and less visible to the driver. Therefore, the driver is suppressed from feeling uncomfortable about the change in brightness between the first region 51 and the second region 55 around the first region 51. Although it is illustrated in FIG. 15 as an example that the shaded region 53 follows the entire circumference of the edge of the first region 51, it is only required that the shaded region 53 follow at least a part of the edge of the first region 51. Therefore, the shaded region 53 is formed in at least a part of a boundary region between the first region 51 and the second region 55. In the present embodiment, a width 53W of the shaded region 53 in a direction perpendicular to a direction in which the shaded region 53 follows the edge of the first region 51 is generally constant in the direction along the edge of the first region 51, but the width 53W may not be constant in the direction along the edge of the first region 51. Furthermore, in the present embodiment, the brightness of the shaded region 53 becomes darker toward the first region 51, and gradually brighter from the first region 51 side toward the side opposite to the first region 51, and such a change in brightness is generally the same in the direction along the edge of the first region 51, but is not limited thereto.

The amount of light in the second region 55 does not change as compared with the amount of light in a region corresponding to the second region 55 of the high beam light distribution pattern PH. As a result, even when the another vehicle 200 is located in front of the host vehicle 100, a decrease in visibility of the driver of the host vehicle 100 with respect to the second region 55 is suppressed.

In order to control light to have such an ADB light distribution pattern P1, in the present embodiment, the image generation unit 20 first reads the high beam image stored in the memory ME. Next, the image generation unit 20 generates an ADB light distribution image indicating an ADB light distribution pattern P1 by performing processing on the high beam image based on information regarding the another vehicle 200 input from the object detection device 140 and information regarding the brightness of the surrounding environment from the brightness detection device 150. The processing on the high beam image by the image generation unit 20 is processing in which a region corresponding to the first region 51 and a region corresponding to the shaded region 53 in the high beam image are darkened, and the brightness of the region corresponding to the shaded region 53 is brighter than the brightness of the region corresponding to the first region 51. By processing the high beam image in this manner, the image generation unit 20 generates an ADB light distribution image. Next, based on the information of the generated ADB light distribution image, the light distribution control unit 40 controls the power supply circuit 50 to emit light based on the ADB light distribution image from the light source unit 12. As a result, light having the ADB light distribution pattern P1 is emitted from the vehicular headlight 1. Then, the control unit CO returns the control flow to step SP41.

### (Step SP49)

In this step, the control unit CO controls the light unit 10 such that the light distribution pattern of the light emitted from the vehicular headlight 1 becomes an ADB light distribution pattern corresponding to a case where the surrounding environment of the host vehicle 100 is darker than the predetermined brightness.

FIG. 16 is a diagram illustrating an example of an ADB light distribution pattern in this step, similarly to FIG. 15. In a situation illustrated in FIG. 16, a position of the another vehicle 200 with respect to the host vehicle 100 is the same as the position in the situation illustrated in FIG. 15. However, the brightness of the surrounding environment of the host vehicle 100 is darker than the predetermined brightness, and is different from the brightness in the situation illustrated in FIG. 15.

The position, amount of light, shape, and size of the first region 51 are the same as those described in step SP48.

The shaded region 53 in this step is different from the shaded region 53 in step SP48. Specifically, the shaded degree of the shaded region 53 is different from the shaded degree of the shaded region 53 in step SP48. That is, the shaded degree of the shaded region 53 changes according to the brightness of the surrounding environment.

Since the shaded degree has changed, the portion followed by the shaded region 53 in the edge of the first region 51 in step SP48 appears in a different manner from the portion followed by the shaded region 53 in the edge of the first region 51 in this step. In the present embodiment, the control unit CO sets the width 53W of the shaded region 53 in this step to be larger than the width 53W of the shaded region 53 in step SP48. As a result, the shaded degree of the shaded region 53 is stronger than the shaded degree of the shaded region 53 in step SP48.

In order to control light to have such an ADB light distribution pattern P2, similarly to the control of light to have an ADB light distribution pattern P1 in step SP48, the image generation unit 20 reads the high beam image stored in the memory ME. Next, the image generation unit 20 generates an ADB light distribution image indicating an ADB light distribution pattern P2 by performing processing on the high beam image based on information regarding the another vehicle 200 from the object detection device 140 and information regarding the brightness of the surrounding environment from the brightness detection device 150. Next, based on the information of the generated ADB light distribution image, the light distribution control unit 40 controls the power supply circuit 50 to emit light based on the ADB light distribution image from the light source unit 12. Therefore, light having the ADB light distribution pattern P2 is emitted from the vehicular headlight 1.

When the light of the ADB light distribution pattern P2 is emitted from the vehicular headlight 1, the control unit CO returns the control flow to step SP41.

In this way, in the vehicular headlight 1 of the present embodiment, when the emission of the high beam is selected by the light switch 110, the light distribution pattern of the emitted light changes according to the brightness of the surrounding environment of the another vehicle 200, which is an object, and the host vehicle 100.

Meanwhile, in Patent Literature 1 described above, the brightness of the surrounding environment of the host vehicle is not considered. There is a demand for enabling the driver to see an edge of a darkened region, such as the light shielding region in Patent Literature 1, in a desired manner according to the brightness of the surrounding environment of the host vehicle. For example, when the surrounding environment of the host vehicle is dark, an edge of a darkened region tends to appear clear. In this case, there is a demand for suppressing the edge of the darkened region from appearing clear.

Therefore, in the vehicular headlight 1 of the present embodiment as the fifth aspect, as described in steps SP45, SP47, SP48, and SP49, when the another vehicle 200 as an object is located in front of the host vehicle 100, the control unit CO forms a first region 51 and a shaded region 53 in the high beam light distribution pattern PH. The first region 51 is a region that overlaps at least a part of the another vehicle 200 in the high beam light distribution pattern PH and is dark as compared with a case where the another vehicle 200 is not located in front of the host vehicle 100, and the shaded region 53 is a region that follows at least a part of the edge of the first region 51. The shaded degree of the shaded region 53 changes according to the brightness of the surrounding environment of the host vehicle 100. Therefore, according to the vehicular headlight 1 of the present embodiment, it is possible to make the edge of the first region 51, which is a darkened region, to appear in a desired manner according to the brightness of the surrounding environment of the host vehicle 100.

In addition, in the present embodiment, the shaded degree of the shaded region 53 when the brightness of the surrounding environment is lower than the predetermined brightness is strong as compared with a case where the brightness of the surrounding environment is equal to or higher than the predetermined brightness. When the surrounding environment such as a mountain area is dark, the edge of the first region 51 tends to appear clearer than when the surrounding environment such as an urban area is bright. According to the vehicular headlight 1 of the present embodiment, it is possible to suppress a change in how the edge of the first region 51 appears between when where the surrounding environment is dark and when the surrounding environment is bright, suppressing the driver from feeling uncomfortable.

In the present embodiment, it has been described as an example that the first region 51 overlaps at least a part of the another vehicle 200 as a predetermined object. However, for example, in a case where the first region 51 overlaps at least a part of a retroreflective object as a predetermined object, the amount of light irradiated to the retroreflective object is decreased. Therefore, the amount of reflected light reflected by the retroreflective object and directed to the host vehicle is decreased, making it possible to suppress glare to the driver of the host vehicle caused by the reflected light. In addition, in a case where the first region 51 overlaps at least a part of a human as a predetermined object, the amount of light irradiated to the human is decreased, making it possible to suppress glare to the human. In this case, the first region 51 preferably overlaps only the human head.

### (Sixth Embodiment)

Next, a sixth embodiment will be described in detail as a fifth aspect of the present invention. Note that the components that are identical or equivalent to those in the fifth embodiment will be denoted by the same reference numerals, and redundant description will be omitted unless otherwise specified.

The brightness detection device 150 of the present embodiment can individually detect a brightness of a right surrounding environment and a brightness of a left surrounding environment of the host vehicle 100. The brightness detection device 150 may be a device including a camera that acquires an image around the host vehicle 100 described above and a brightness detection unit.

Next, an operation of the vehicular headlight 1 of the present embodiment will be described. The present embodiment is different from the fifth embodiment in that the control flowchart of the control unit CO does not include steps SP47 and SP49. In addition, steps SP45 and SP48 of the present embodiment are different from those in the fifth embodiment. Therefore, steps SP45 and SP48 will be described below, and the description of the other steps will be omitted.

### (Step SP45)

In step SP45 of the present embodiment, the control unit CO advances the control flow to step SP46 when a signal indicating that no predetermined object is present is input from the object detection device 140, and advances the control flow to step SP48 when a signal indicating information regarding the predetermined object is input from the object detection device 140.

### (Step SP48)

In step SP48 of the present embodiment, the control unit CO controls the light unit 10 such that the light distribution pattern of the light emitted from the vehicular headlight 1 becomes an ADB light distribution pattern corresponding to a brightness of the surrounding environment of the host vehicle 100.

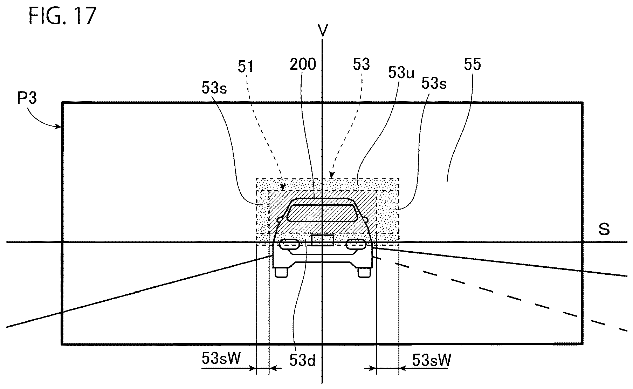

FIG. 17 is a diagram illustrating an example of an ADB light distribution pattern in this step, similarly to FIG. 15. An ADB light distribution pattern P3 in this step is a light distribution pattern in which the first region 51 and the shaded region 53 are formed in the high beam light distribution pattern PH, similarly to the ADB light distribution patterns P1 and P2 illustrated in FIGS. 15 and 16. That is, the control unit CO controls the light unit 10 such that the first region 51 and the shaded region 53 are formed in the high beam light distribution pattern PH.

The shaded region 53 of the present embodiment includes a pair of side shaded regions 53s and 53s following the left and right edges of the first region 51, respectively. Although it is illustrated in FIG. 17 as an example that the side shaded regions 53s and 53s follow the entire left and right edges of the first region 51, respectively, it is only required that the side shaded regions 53s and 53s follow at least parts of the left and right edges of the first region 51.

Furthermore, in the present embodiment, the shaded degrees of the pair of side shaded regions 53s and 53s are stronger as the surrounding environment is darker, and are equal when a difference between the brightness of the left surrounding environment and the brightness of the right surrounding environment is smaller than a predetermined difference. In addition, when the difference is equal to or larger than the predetermined difference, the shaded degree of the side shaded region 53s located on the side where the brightness of the surrounding environment is dark is stronger than the shaded degree of the side shaded region 53s located on the side where the brightness of the surrounding environment is bright. In FIG. 17, a situation in which the brightness of the right surrounding environment is higher than the brightness of the left surrounding environment is illustrated. In the present embodiment, by making a width 53sW of one located on the side where the brightness of the surrounding environment is dark of the left and right side shaded regions 53s larger than a width 53sW of the other one located on the side where the brightness of the surrounding environment is bright of the left and right side shaded regions 53s, the shaded degree of the side shaded region 53s located on the dark side is stronger than the shaded degree of the side shaded region 53s located on the bright side. In addition, the greater the difference between the brightness of the left surrounding environment and the brightness of the right surrounding environment, the greater the difference between the shaded degree of the side shaded region 53s located on the dark side and the shaded degree of the side shaded region 53s located on the bright side.

In order to control light to have such an ADB light distribution pattern P3, the image generation unit 20 generates an ADB light distribution image indicating an ADB light distribution pattern P3 by performing processing on the high beam image based on information regarding the another vehicle 200 from the object detection device 140 and information regarding the brightnesses of the left and right surrounding environments from the brightness detection device 150. Next, in the image generation unit 20, based on the information of the generated ADB light distribution image, the light distribution control unit 40 controls the power supply circuit 50 to emit light based on the ADB light distribution image from the light source unit 12. Therefore, light having the ADB light distribution pattern P2 is emitted from the vehicular headlight 1.

When the brightnesses of the left and right surrounding environments are different, the dark one of the left and right edges of the first region 51 tends to appear clearer than the bright one of the left and right edges of the first region 51. According to the vehicular headlight 1 of the present embodiment, in such a case, it is possible to suppress an occurrence of a difference in appearance between the left and right edges of the first region 51, suppressing the driver from feeling uncomfortable. Note that, as a case where the brightness of the surrounding environment is different between the left and right sides, for example, there may be a case with a street light where the side on which the street light is located is brighter than the side opposite to the street light.

Note that the shaded degrees of the pair of side shaded regions 53s and 53s may be constant regardless of the degrees of brightness of the left and right surrounding environments when the difference between the brightness of the left surrounding environment and the brightness of the right surrounding environment is smaller than the predetermined difference.

Although the fifth aspect of the present invention has been described above by taking the fifth and sixth embodiments as examples, the fifth aspect of the present invention is not limited thereto.

For example, in the fifth and sixth embodiments, it has been described as an example that the first region 51 and the shaded region 53 are formed in the high beam light distribution pattern. However, the light distribution pattern in which the first region 51 and the shaded region 53 are formed is not limited, and for example, these regions may be formed in an additional light distribution pattern that is added to a low beam light distribution pattern to form a high beam light distribution pattern. In this case, for example, a low beam is emitted from a light unit different from the light unit 10, and the light unit 10 emits light having an additional light distribution pattern.

Furthermore, in the fifth and sixth embodiments, it has been described as an example that the light source unit 12 includes a plurality of light emitting elements 13 capable of individually changing the amount of light emitted therefrom. However, the light source unit 12 is not limited. For example, the light source unit 12 may include a digital mirror device (DMD) including a plurality of reflective elements arranged in a matrix and a light emitting unit that irradiates the DMD with light. The DMD can adjust the amount of light emitted in a predetermined direction from a reflective surface of each of the reflective elements, such that the light emitted in the predetermined direction from each of the reflective elements can be light based on the image generated by the image generation unit 20. In this case, it can be understood that the reflective surface of each of the reflective elements corresponds to a light emitting unit capable of individually changing the amount of light to be emitted.

In the fifth and sixth embodiments, it has been described as an example that the control unit CO includes an image generation unit 20 and controls the light unit 10 based on an ADB image generated by the image generation unit 20. However, the control unit CO does not need to include the image generation unit 20. In this case, for example, information regarding an ADB light distribution pattern according to a predetermined object may be stored in the memory ME in advance, and the control unit CO may control the light unit 10 based on the information.

In addition, in the fifth embodiment, it has been described as an example that the shaded degree of the shaded region 53 when the brightness of the surrounding environment is lower than the predetermined brightness is strong as compared with a case where the brightness of the surrounding environment is equal to or higher than the predetermined brightness. However, it is only required that the shaded degree of the shaded region 53 change according to the brightness of the surrounding environment. For example, in the first embodiment, the shaded degree of the shaded region 53 may change in multiple stages according to the brightness of the surrounding environment, may be stronger as the brightness of the surrounding environment is lower, or may be weaker as the brightness of the surrounding environment is lower. In addition, when the brightness of the surrounding environment is equal to or higher than the predetermined brightness, the shaded degree of the shaded region 53 may be zero. That is, when the brightness of the surrounding environment is equal to or higher than the predetermined brightness, the shaded region 53 may not be formed, and when the brightness of the surrounding environment is lower than the predetermined brightness, the shaded region 53 may be formed. Similarly, in the sixth embodiment as well, when the brightness of the surrounding environment is equal to or higher than the predetermined brightness, the shaded region 53 may not be formed, and when the brightness of the surrounding environment is lower than the predetermined brightness, the shaded region 53 may be formed.

In the fifth and sixth embodiments, it has been described as an example that the host vehicle 100 includes a pair of vehicular headlights 1 each including a control unit CO and a memory ME. However, at least one of the control unit CO and the memory ME may be shared by the pair of vehicular headlights 1. In addition, a signal output from each of the object detection device 140 and the brightness detection device 150 may be input to the control unit CO without passing through the ECU 130. In addition, the host vehicle in which the vehicular headlights 1 are provided, the number of vehicular headlights 1 provided in the host vehicle, and the like are not particularly limited.

### (Seventh Embodiment)

Next, a seventh embodiment will be described as a sixth aspect of the present invention. Note that the components that are identical or equivalent to those in the fifth embodiment will be denoted by the same reference numerals, and redundant description will be omitted unless otherwise specified.

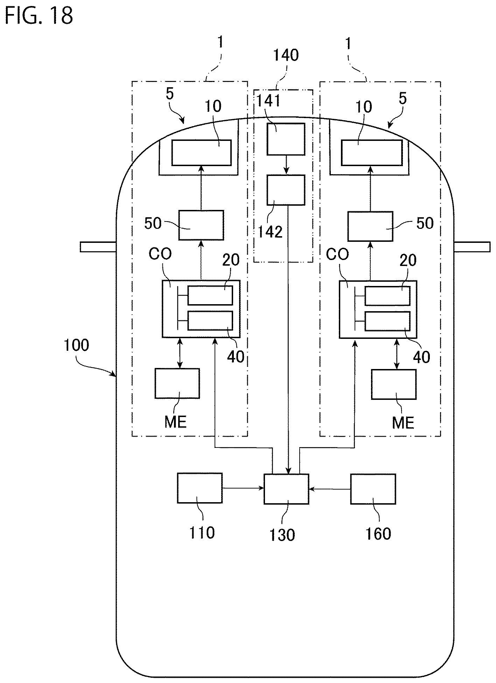

FIG. 18 is a schematic diagram illustrating a host vehicle including a vehicular headlight according to the present embodiment. As illustrated in FIG. 18, the host vehicle 100 of the present embodiment is mainly different from the host vehicle 100 of the fifth embodiment in that a vibration sensor 160 is provided instead of the brightness detection device 150.

In addition, the image generation unit 20 of the present embodiment generates an adaptive driving beam (ADB) light distribution image by performing processing on the high beam image based on information indicated by the signal input from each of the object detection device 140 and the vibration sensor 160. The ADB light distribution image is an image indicating an ADB light distribution pattern in which a partial region of the high beam light distribution pattern is a first region where the amount of light is decreased, and a region following at least a part of an edge of the first region is a blurry region in which the amount of light is decreased and which is brighter than the first region.

In the present embodiment, as described above, the image generation unit 20 generates an image based on the information indicated by the signal input from each of the object detection device 140 and the vibration sensor 160. Therefore, the control unit CO receives a signal from each of the object detection device 140 and the vibration sensor 160 and controls the light unit 10 using the image generation unit 20 and the light distribution control unit 40.

The vibration sensor 160 of the present embodiment detects vibration of the host vehicle 100 and outputs a signal indicating information regarding the detected vibration to the control unit CO via the ECU 130. Examples of the vibration sensor 160 include a gyro sensor and the like. The vibration sensor 160 of the present embodiment can detect a vibration direction and an amplitude of the host vehicle 100.

Next, the operation of the vehicular headlight 1 of the present embodiment will be described. In the present embodiment, the operations of the pair of vehicular headlights 1 are the same and synchronized with each other. Therefore, hereinafter, the operation of one vehicular headlight 1 will be described, and the description of the operation of the other vehicular headlight 1 will be omitted.

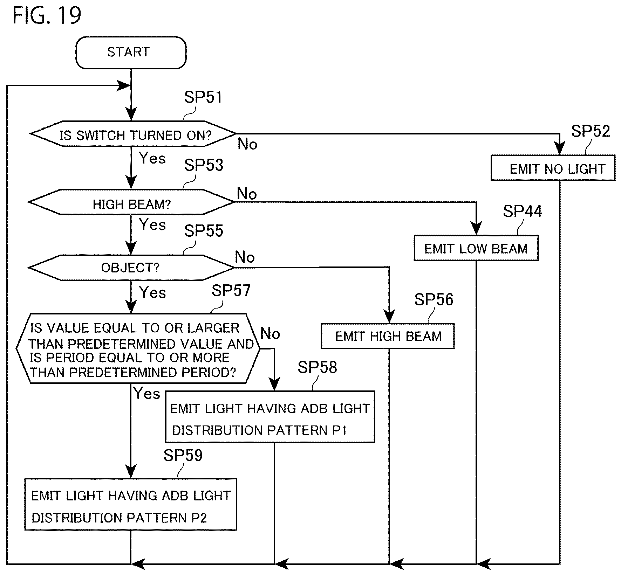

FIG. 19 is a flowchart of control performed by the control unit CO in the present embodiment. As illustrated in FIG. 19, the control flow includes steps SP51 to SP59. In the start state illustrated in FIG. 19, it is assumed that a signal is input to the control unit CO from each of the object detection device 140 and the vibration sensor 160. In addition, steps SP51 to SP56 are similar to steps SP41 to SP46 in the fifth embodiment. Therefore, the description of steps SP51 to SP56 will be omitted.

### (Step SP57)

In this step, the control unit CO advances the control flow to step SP59 when a signal indicating an amplitude of vibration equal to or higher than the predetermined value is input from the vibration sensor 160 and the vibration having the amplitude equal to or higher than the predetermined value continues for a predetermined period or more. In addition, when a signal indicating an amplitude of vibration lower than the predetermined value is input from the vibration sensor 160, or when a period during which vibration having an amplitude equal to or higher than the predetermined value continues is less than the predetermined period, the control unit CO advances the control flow to step SP58. In the present embodiment, the predetermined value is set to a value such that the control flow proceeds to step SP58 when the host vehicle 100 travels on a paved road, and the control flow proceeds to step SP59 when the host vehicle 100 travels on an uneven road such as an unpaved gravel road. In addition, in the present embodiment, the predetermined period is set to a period such that the control flow proceeds to step SP58 when the host vehicle 100 momentarily vibrates up and down with an amplitude equal to or higher than the predetermined value, for example, as the host vehicle 100 passes over one bump of the road, but the period is not limited.

### (Step SP58)

In this step, the control unit CO controls the light unit 10 such that the light distribution pattern of the light emitted from the vehicular headlight 1 becomes an ADB light distribution pattern corresponding to a case where the amplitude of the vibration of the host vehicle 100 is lower than the predetermined value. Hereinafter, a case where the predetermined object is another vehicle will be described as an example.

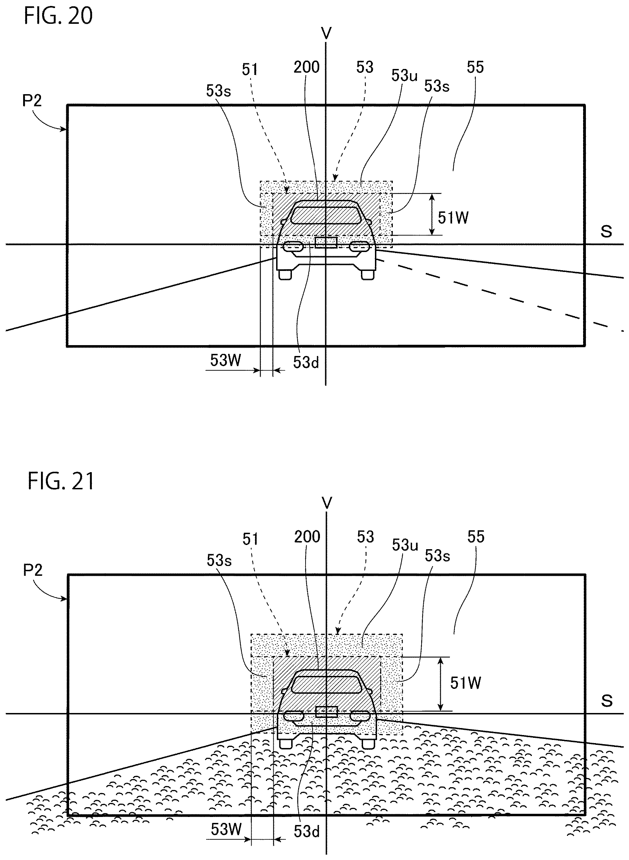

FIG. 20 is a diagram illustrating an example of an ADB light distribution pattern in this step, similarly to FIG. 15. The ADB light distribution pattern P1 in this step is a light distribution pattern in which the first region 51 and the shaded region 53 are formed in the high beam light distribution pattern PH. That is, the control unit CO controls the light unit 10 such that the first region 51 and the shaded region 53 are formed in the high beam light distribution pattern PH.

The first region 51 overlaps at least a part of another vehicle 200 in the high beam light distribution pattern PH, and is dark as compared with a case where the another vehicle 200 is not located in front of the host vehicle 100. That is, the amount of light in the first region 51 is smaller than an amount of light in a region corresponding to the first region 51 of the high beam light distribution pattern PH. Therefore, according to the vehicular headlight 1 of the present embodiment, it is possible to reduce the amount of light irradiated to the another vehicle 200 from the host vehicle 100, suppressing glare to a driver of the another vehicle 200. Note that the first region 51 of the present embodiment is a light shielding region that is not irradiated with light, but is not limited thereto. In the example illustrated in FIG. 20, the first region 51 has a rectangular shape overlapping a portion above the license plate of the another vehicle 200. However, from the viewpoint of suppressing glare to the driver of the another vehicle 200, it is only required that the first region 51 overlap at least a part of a visible portion for the driver of the another vehicle 200 to view the outside of the vehicle. For example, the first region 51 may overlap the whole of the another vehicle 200, and the shape and size of the first region 51 are not limited.

The shaded region 53 is a region following at least a part of an edge of the first region 51 in the high beam light distribution pattern PH, is dark as compared with a case where the another vehicle 200 is not located in front of the host vehicle 100, and is brighter than the first region 51. Since the shaded region 53 follows the edge of the first region 51, it is more difficult for the driver to visually recognize a contrast of brightness from the first region 51 to a second region 55 that is a region around the first region 51, making the edge of the first region 51 to appear unclearer, as compared with that in a case where no shaded region 53 is provided. This makes the edge less noticeable and less visible to the driver. Therefore, the driver is suppressed from feeling uncomfortable about the change in brightness between the first region 51 and the second region 55 around the first region 51.

In the present embodiment, the shaded region 53 includes a pair of side shaded regions 53s and 53s following the left and right edges of the first region 51, an upper shaded region 53u following the upper edge of the first region 51, and a lower shaded region 53d following the lower edge of the first region 51. In FIG. 20, it is illustrated as an example that the side shaded regions 53s and 53s follow the entire left and right edges of the first region 51, respectively, the upper shaded region 53u follows the entire upper edge of the first region 51, and the lower shaded region 53d follows the entire lower edge of the first region 51. That is, the shaded region 53 follows the entire circumference of the edge of the first region 51. However, it is only required that the shaded region 53 follow at least a part of the edge of the first region 51. Therefore, the shaded region 53 is formed in at least a part of a boundary region between the first region 51 and the second region 55. In the present embodiment, a width 53W of the shaded region 53 in a direction perpendicular to a direction in which the shaded region 53 follows the edge of the first region 51 is generally constant in the direction along the edge of the first region 51. That is, the pair of side shaded regions 53s and 53s, the upper shaded region 53u, and the lower shaded region 53d have the same width 53W in the direction perpendicular to the direction along the edge of the first region 51. However, the widths of the shaded region 53 may not be constant in the direction along the edge of the first region 51. Furthermore, in the present embodiment, the brightness of the shaded region 53 becomes darker toward the first region 51, and gradually brighter from the first region 51 side toward the side opposite to the first region 51, and such a change in brightness is generally the same in the direction along the edge of the first region 51, but is not limited thereto. For example, the brightnesses of the side shaded regions 53s and 53s, the upper shaded region 53u, and the lower shaded region 53d may be different from each other.

The amount of light in the second region 55 does not change as compared with the amount of light in a region corresponding to the second region 55 of the high beam light distribution pattern PH. As a result, even when the another vehicle 200 is located in front of the host vehicle 100, a decrease in visibility of the driver of the host vehicle 100 with respect to the second region 55 is suppressed.

In order to control light to have such an ADB light distribution pattern P1, in the present embodiment, the image generation unit 20 first reads the high beam image stored in the memory ME. Next, the image generation unit 20 generates an ADB light distribution image indicating an ADB light distribution pattern P1 by performing processing on the high beam image based on information regarding the another vehicle 200 input from the object detection device 140 and information regarding the vibration of the host vehicle 100 from the vibration sensor 160. The processing on the high beam image by the image generation unit 20 is processing in which a region corresponding to the first region 51 and a region corresponding to the shaded region 53 in the high beam image are darkened, and the brightness of the region corresponding to the shaded region 53 is brighter than the brightness of the region corresponding to the first region 51. By processing the high beam image in this manner, the image generation unit 20 generates an ADB light distribution image. Next, based on the information of the generated ADB light distribution image, the light distribution control unit 40 controls the power supply circuit 50 to emit light based on the ADB light distribution image from the light source unit 12. As a result, light having the ADB light distribution pattern P1 is emitted from the vehicular headlight 1. Then, the control unit CO returns the control flow to step SP51.

### (Step SP59)

In this step, the control unit CO controls the light unit 10 such that the light distribution pattern of the light emitted from the vehicular headlight 1 becomes an ADB light distribution pattern corresponding to a case where the amplitude of the vibration of the host vehicle 100 is equal to or higher than the predetermined value and the vibration having the amplitude equal to or higher than the predetermined value continues for a predetermined period or more.

FIG. 21 is a diagram illustrating an example of an ADB light distribution pattern in this step, similarly to FIG. 20. In a situation illustrated in FIG. 21, a position of the another vehicle 200 with respect to the host vehicle 100 is the same as the position in the situation illustrated in FIG. 20. However, the situation illustrated in FIG. 21 is a situation in which the amplitude of the vibration of the host vehicle 100 is equal to or higher than the predetermined value and the vibration having the amplitude equal to or higher than the predetermined value continues for the predetermined period or more, and the amplitude of the vibration of the host vehicle 100 is different from the amplitude in the situation illustrated in FIG. 20.

The first region 51 in this step is different from the first region 51 in step SP58. Specifically, a position of the center of the first region 51 relative to the another vehicle 200 and a width of the first region 51 in the left-right direction are the same as those in step SP58, but a width 51W of the first region 51 in the up-down direction is larger than a width 51W of the first region 51 in the up-down direction in step SP58. Therefore, the first region 51 expands on both the upper side and the lower side as compared with the first region 51 in step SP58. However, it is only required that the width 51W of the first region 51 in the up-down direction is larger than the width in step SP58, and for example, the first region 51 may extend to one of the upper side and the lower side.

The shaded region 53 in this step is different from the shaded region 53 in step SP58. Specifically, the shaded degree of the shaded region 53 is stronger than the shaded degree of the shaded region 53 in step SP58.

Since the shaded degree has changed, the portion followed by the shaded region 53 in the edge of the first region 51 in step SP58 appears in a different manner from the portion followed by the shaded region 53 in the edge of the first region 51 in this step. In the present embodiment, the control unit CO sets the width 53W of the shaded region 53 in this step to be larger than the width 53W of the shaded region 53 in step SP58. As a result, the shaded degree of the shaded region 53 is stronger than the shaded degree of the shaded region 53 in step SP58. In the present embodiment, the width 53W of the shaded region 53 is generally constant in the direction along the edge of the first region 51, but the width 53W may not be constant in this direction.

In order to control light to have such an ADB light distribution pattern P2, similarly to the control of light to have an ADB light distribution pattern P1 in step SP58, the image generation unit 20 reads the high beam image stored in the memory ME. Next, the image generation unit 20 generates an ADB light distribution image indicating an ADB light distribution pattern P2 by performing processing on the high beam image based on information regarding the another vehicle 200 from the object detection device 140 and information regarding the vibration of the host vehicle 100 from the vibration sensor 160. Next, based on the information of the generated ADB light distribution image, the light distribution control unit 40 controls the power supply circuit 50 to emit light based on the ADB light distribution image from the light source unit 12. Therefore, light having the ADB light distribution pattern P2 is emitted from the vehicular headlight 1.

When the light of the ADB light distribution pattern P2 is emitted from the vehicular headlight 1, the control unit CO returns the control flow to step SP51.

In this way, in the vehicular headlight 1 of the present embodiment, when the emission of the high beam is selected by the light switch 110, the light distribution pattern of the emitted light changes according to the amplitude of vibration of the another vehicle 200, which is a predetermined object, and the host vehicle 100.

Meanwhile, the vehicle vibrates when traveling on an uneven road such as a gravel road, but in Patent Literature 1 described above, the control when the vehicle vibrates is not considered. When the host vehicle vibrates, a darkened region such as the light shielding region of Patent Literature 1 tends to vibrate due to the vibration of the host vehicle, and when the amplitude of the vibration of the host vehicle increases, the amplitude of the vibration in the darkened region also tends to increase. When the amplitude of the vibration in the darkened region increases, the driver may feel annoyed with the vibration in the darkened region.

Therefore, in the vehicular headlight 1 of the present embodiment as the sixth aspect, as described in steps SP57, SP58, and SP59, when the another vehicle 200 as a predetermined object is located in front of the host vehicle 100, the control unit CO forms a first region 51 and a shaded region 53 in the high beam light distribution pattern PH. The first region 51 is a region that overlaps at least a part of the another vehicle 200 in the high beam light distribution pattern PH and is dark as compared with a case where the another vehicle 200 is not located in front of the host vehicle 100, and the shaded region 53 is a region that follows at least a part of the edge of the first region 51. When the host vehicle 100 vibrates, the first region 51 tends to vibrate due to the vibration of the host vehicle 100, and when the amplitude of the vibration of the host vehicle 100 increases, the amplitude of the vibration of the first region 51 also tends to increase. When the amplitude of the vibration in first region 51 increases, the driver of host vehicle 100 may feel annoyed with the vibration in the first region 51. However, in the vehicular headlight 1 of the present embodiment, the shaded degree of the shaded region 53 when the amplitude of the vibration of the host vehicle 100 is equal to or higher than the predetermined value and the vibration having the amplitude equal to or higher than the predetermined value continues for the predetermined period or more is stronger than the shaded degree of the shaded region 53 when the amplitude of the vibration of the host vehicle 100 is lower than the predetermined value or the period for which the vibration having the amplitude equal to or higher than the predetermined value continues is less than the predetermined period. Therefore, according to the vehicular headlight 1 of the present embodiment, the edge of the first region 51 appears unclearer, making it possible to suppress the driver from feeling annoyed with the vibration of the first region 51 so that the edge is less noticeable, than that when the shaded degree of the shaded region 53 does not change.

When the host vehicle 100 travels on an uneven road such as a gravel road, the amplitude of the vibration of the host vehicle 100 in the up-down direction tends to be larger than the amplitude of the vibration of the host vehicle 100 in the left-right direction. In the present embodiment, the shaded region 53 includes both the upper shaded region 53u following the upper edge of the first region 51 and the lower shaded region 53d following the lower edge of the first region 51. Therefore, according to the vehicular headlight 1 of the present embodiment, it is possible to suppress the driver from feeling annoyed with the vibration of the first region 51 as compared with a case where the shaded region 53 does not include the upper shaded region 53u and the lower shaded region 53d. From this viewpoint, it is only required that the shaded region 53 include at least one of the upper shaded region 53u and the lower shaded region 53d.

The upper edge of the first region 51 tends to be located in the air as compared with the lower edge of the first region 51, and the lower edge of the first region 51 tends to overlap an object such as a road or a building as compared with the upper edge of the first region 51. Therefore, the lower edge of the first region 51 tends to be easier for the driver to visually recognize than the upper edge of the first region 51. In the present embodiment, as described above, the shaded region 53 includes the lower shaded region 53d. Therefore, according to the vehicular headlight 1 of the present embodiment, it is possible to suppress the driver from feeling annoyed with the vibration of the first region 51 as compared with a case where the shaded region 53 does not include the lower shaded region 53d. From this viewpoint, it is only required that the shaded region 53 include at least the lower shaded region 53d.

In addition, as the amplitude of the vibration of the first region 51 is larger, the region overlapping the another vehicle 200 in the first region 51 tends to be narrower. In the present embodiment, the width 51W of the first region 51 in the up-down direction when the amplitude of the vibration of the host vehicle 100 is equal to or higher than the predetermined value and the vibration having the amplitude equal to or higher than the predetermined value continues for the predetermined period or more is larger than the width 51W of the first region 51 in the up-down direction when the amplitude of the vibration of the host vehicle 100 is lower than the predetermined value or the period for which the vibration having the amplitude equal to or higher than the predetermined value continues is less than the predetermined period. Therefore, according to the vehicular headlight 1 of the present embodiment, it is possible to suppress the region overlapping the another vehicle 200 in the first region 51 from being narrow as compared with a case where the width 51W of the first region 51 in the up-down direction does not change. Therefore, according to the vehicular headlight 1 of the present embodiment, it is possible to suppress glare to the driver of the another vehicle 200 as compared with this case. From this point of view, it is only required that the width 51W of the first region 51 in the up-down direction be larger as the amplitude of the vibration of the host vehicle 100 is higher. For example, regardless of whether the vibration having the amplitude equal to or higher than the predetermined value continues for the predetermined period or more, the width 51W when the amplitude of the vibration of the host vehicle 100 is equal to or higher than the predetermined value may be large as compared with a case where the amplitude of the vibration of the host vehicle 100 is lower than the predetermined value, and the width 51W may be larger in multiple stages as the amplitude is higher. Note that the width 51W may not change according to the amplitude.

In the present embodiment, it has been described as an example that the first region 51 overlaps at least a part of the another vehicle 200 as a predetermined object. However, for example, in a case where the first region 51 overlaps at least a part of a retroreflective object as a predetermined object, the amount of light irradiated to the retroreflective object is decreased. Therefore, the amount of reflected light reflected by the retroreflective object and directed to the host vehicle is decreased, making it possible to suppress glare to the driver of the host vehicle caused by the reflected light. In addition, in a case where the first region 51 overlaps at least a part of a human as a predetermined object, the amount of light irradiated to the human is decreased, making it possible to suppress glare to the human. In this case, the first region 51 preferably overlaps only the human head.

Although the sixth aspect of the present invention has been described by taking the seventh embodiment as an example, the sixth aspect of the present invention is not limited thereto.

For example, in the seventh embodiment, it has been described as an example that the first region 51 and the shaded region 53 are formed in the high beam light distribution pattern. However, the light distribution pattern in which the first region 51 and the shaded region 53 are formed is not limited, and for example, these regions may be formed in an additional light distribution pattern that is added to a low beam light distribution pattern to form a high beam light distribution pattern. In this case, for example, a low beam is emitted from a light unit different from the light unit 10, and the light unit 10 emits light having an additional light distribution pattern.

In addition, in the seventh embodiment, it has been described as an example that the light source unit 12 includes a plurality of light emitting elements 13 capable of individually changing the amount of light emitted therefrom. However, the light source unit 12 is not limited. For example, the light source unit 12 may include a digital mirror device (DMD) including a plurality of reflective elements arranged in a matrix and a light emitting unit that irradiates the DMD with light. The DMD can adjust the amount of light emitted in a predetermined direction from a reflective surface of each of the reflective elements, such that the light emitted in the predetermined direction from each of the reflective elements can be light based on the image generated by the image generation unit 20. In this case, it can be understood that the reflective surface of each of the reflective elements corresponds to a light emitting unit capable of individually changing the amount of light to be emitted.

In the seventh embodiment, it has been described as an example that the control unit CO includes an image generation unit 20 and controls the light unit 10 based on an ADB image generated by the image generation unit 20. However, the control unit CO does not need to include the image generation unit 20. In this case, for example, information regarding an ADB light distribution pattern according to a predetermined object may be stored in the memory ME in advance, and the control unit CO may control the light unit 10 based on the information.

In the seventh embodiment, it has been described as an example that the shaded degree of the shaded region 53 when the amplitude of the vibration of the host vehicle 100 is equal to or higher than the predetermined value and the vibration having the amplitude equal to or higher than the predetermined value continues for the predetermined period or more is strong as compared with a case where the shaded degree of the shaded region 53 when the amplitude of the vibration of the host vehicle 100 is lower than the predetermined value or the period for which the vibration having the amplitude equal to or higher than the predetermined value continues is less than the predetermined period. However, it is only required that the shaded degree of shaded region 53 be stronger as the amplitude of the vibration of the host vehicle 100 is higher. According to such a configuration, the edge of the first region 51 appears unclear, making it possible to suppress the driver from feeling annoyed with the vibration of the first region 51 so that the edge is less noticeable, than that when the shaded degree of the shaded region 53 does not change.

Note that, for example, regardless of whether the vibration having the amplitude equal to or higher than the predetermined value continues for the predetermined period or more, the shaded degree of the shaded region 53 when the amplitude is equal to or higher than the predetermined value may be stronger in a case where the amplitude is lower than the predetermined value. In addition, the larger the amplitude, the stronger the shaded degree may be in multiple stages.

In addition, when the amplitude of the vibration of the host vehicle 100 is lower than the predetermined value, the shaded degree of the shaded region 53 may not be stronger according to the amplitude. In addition, when the amplitude of the vibration of the host vehicle 100 is lower than the predetermined value, the shaded degree of the shaded region 53 may be zero. That is, the control unit CO may control the light unit 10 in this manner. According to such a configuration, the shaded region 53 may be formed when the host vehicle 100 travels on an uneven road such as an unpaved gravel road, and the shaded region 53 may not be formed when the host vehicle travels on a paved road. When the amplitude of the vibration of the host vehicle 100 is equal to or higher than the predetermined value, the shaded degree of the shaded region 53 may be constant. In this way, the shaded degree of the shaded region 53 is stronger in one stage according to the amplitude.

In addition, when the period for which the vibration of the host vehicle 100 having the amplitude equal to or higher than the predetermined value continues is less than the predetermined period, or when the number of times the vibration of the host vehicle 100 having the amplitude equal to or higher than the predetermined value is consecutively repeated is smaller than a predetermined number, the shaded degree of the shaded region may not be stronger. In addition, when the period for which the vibration of the host vehicle 100 having the amplitude equal to or higher than the predetermined value continues is less than the predetermined period, or when the number of times the vibration of the host vehicle having the amplitude equal to or higher than the predetermined value is consecutively repeated is smaller than the predetermined number, the shaded degree of the shaded region may be zero. That is, the control unit CO may control the light unit 10 in this manner. The predetermined number is, for example, equal to or smaller than the number of times the vibration having the amplitude equal to or higher than the predetermined value is consecutively repeated when the host vehicle 100 travels on an uneven road, and is larger than the number of times the vibration having the amplitude equal to or higher than the predetermined value is consecutively repeated when the host vehicle 100 momentarily vibrates, for example, as the host vehicle 100 passes over one bump of the road. The predetermined number is, for example, three, but is not limited thereto. According to such a configuration, the shaded region may be formed when the host vehicle 100 travels on an uneven road, and the shaded region 53 may not be formed when the host vehicle 100 momentarily vibrates with an amplitude equal to or higher than the predetermined value, for example, as the host vehicle 100 passes over one bump of the road. When the period is equal to or more than the predetermined period, or when the number of times is equal to or larger than the predetermined number, the shaded degree of the shaded region 53 may be constant. In this way, the shaded degree of the shaded region 53 is stronger in one stage according to the amplitude.

In the seventh embodiment, it has been described as an example that the host vehicle 100 includes a pair of vehicular headlights 1 each including a control unit CO and a memory ME. However, at least one of the control unit CO and the memory ME may be shared by the pair of vehicular headlights 1. In addition, a signal output from each of the object detection device 140 and the brightness detection device 150 may be input to the control unit CO without passing through the ECU 130. In addition, the host vehicle in which the vehicular headlights 1 are provided, the number of vehicular headlights 1 provided in the host vehicle, and the like are not particularly limited.

According to the first to fourth aspects of the present invention, there is provided a vehicular headlight capable of suppressing a driver from feeling annoyed with a movement of a darkened region, for use in the field of automobiles and the like. Furthermore, according to the fifth aspect of the present invention, there is provided a vehicular headlight capable of making an edge of a darkened region to appear in a desired manner according to a brightness of a surrounding environment of a host vehicle, for use in the field of automobiles and the like. Furthermore, according to the sixth aspect of the present invention, there is provided a vehicular headlight capable of suppressing a driver from feeling annoyed with vibration in a darkened region, for use in the field of automobiles and the like.

## Claims

1. A vehicular headlight comprising:
a light unit configured to change a light distribution pattern of light to be emitted; and
a control unit configured to receive a signal from a detection device that detects another vehicle located in front of a host vehicle and control the light unit,
wherein, when the another vehicle is located in front of the host vehicle, the control unit forms a first region that overlaps at least a part of the another vehicle in the light distribution pattern and is darker than when the another vehicle is not located in front of the host vehicle, and when the another vehicle is moving relative to the host vehicle, the control unit forms a shaded region adjoining at least a part of an edge of the first region for causing shading, and
when the another vehicle is moving relative to the host vehicle, a shaded degree of the shaded region is stronger than when the another vehicle is not moving relative to the host vehicle.

2. The vehicular headlight according to claim 1, wherein
when the another vehicle is moving relative to the host vehicle, the control unit forms a first shaded region and a second shaded region in the shaded region, the first shaded region being located on a moving direction side of the another vehicle with respect to the first region in a direction in which the another vehicle moves with respect to the host vehicle, and the second shaded region being located on a side opposite to the first shaded region with respect to the first region, and
the first shaded region and the second shaded region have different shaded degrees.

3. The vehicular headlight according to claim 2, wherein
the first shaded region has a stronger shaded degree than the second shaded region.

4. The vehicular headlight according to claim 1, wherein
the control unit does not form the shaded region when the another vehicle is not moving relative to the host vehicle.

5. A vehicular headlight comprising:
a light unit configured to change a light distribution pattern of light to be emitted; and
a control unit configured to receive a signal from a detection device that detects another vehicle located in front of a host vehicle and traveling states of the host vehicle and the another vehicle and control the light unit,
wherein when the another vehicle is located in front of the host vehicle, the control unit forms a first region that overlaps at least a part of the another vehicle in the light distribution pattern, and is darker than when the another vehicle is not located in front of the host vehicle, and when at least one of the host vehicle and the another vehicle is traveling on a curve, the control unit forms a shaded region adjoining at least a part of each of left and right edges of the first region for causing shading, and
when at least one of the host vehicle and the another vehicle is traveling on the curve, a shaded degree of the shaded region is stronger than when the host vehicle and the another vehicle are traveling on a straight road.

6. The vehicular headlight according to claim 5, wherein
when the host vehicle is traveling on the curve, the control unit forms a first shaded region and a second shaded region in the shaded region, the first shaded region being located on a side where the host vehicle turns with respect to the first region in a left-right direction of the host vehicle traveling on the curve, and the second shaded region being located on a side opposite to the first shaded region with respect to the first region, and
the first shaded region and the second shaded region have different shaded degrees.

7. The vehicular headlight according to claim 6, wherein
the first shaded region has a stronger shaded degree than the second shaded region.

8. The vehicular headlight according to claim 5, wherein
the control unit does not form the shaded region when the host vehicle and the another vehicle are traveling on the straight road.

9. A vehicular headlight comprising:
a light unit configured to change a light distribution pattern of light to be emitted; and
a control unit configured to receive a signal from a detection device that detects another vehicle located in front of a host vehicle and a traveling state of the host vehicle and control the light unit,
wherein, when the another vehicle is located in front of the host vehicle and the host vehicle is traveling on a curve, the control unit forms a first region that overlaps at least a part of the another vehicle in the light distribution pattern, and is darker than when the another vehicle is not located in front of the host vehicle, and forms a first shaded region and a second shaded region, the first shaded region being located on a side where the host vehicle turns with respect to the first region and adjoining at least a part of an edge of the first region, and the second shaded region being located on a side opposite to the first shaded region with respect to the first region and adjoining at least a part of an edge of the first region, and
the first shaded region and the second shaded region have different shaded degrees.

10. A vehicular headlight comprising:
a light unit configured to change a light distribution pattern of light to be emitted; and
a control unit configured to receive a signal from a detection device that detects another vehicle located in front of a host vehicle and a traveling state of the another vehicle and control the light unit,
wherein, when the another vehicle is located in front of the host vehicle and the another vehicle is traveling on a curve, the control unit forms a first region that overlaps at least a part of the another vehicle in the light distribution pattern, and is darker than when the another vehicle is not located in front of the host vehicle, and forms a first shaded region and a second shaded region, the first shaded region being located on a side where the another vehicle turns with respect to the first region and adjoining at least a part of an edge of the first region, and the second shaded region being located on a side opposite to the first shaded region with respect to the first region and adjoining at least a part of an edge of the first region, and
the first shaded region and the second shaded region have different shaded degrees.

11. The vehicular headlight according to claim 9 or 10, wherein
the first shaded region has a stronger shaded degree than the second shaded region.

12. The vehicular headlight according to claim 9 or 10, wherein
the control unit does not form the first shaded region and the second shaded region when the host vehicle and the another vehicle are traveling on a straight road.

13. A vehicular headlight comprising:
a light unit configured to change a light distribution pattern of light to be emitted; and
a control unit configured to receive a signal from each of an object detection device that detects a predetermined object located in front of a host vehicle and a brightness detection device that detects a brightness of a surrounding environment of the host vehicle and control the light unit,
wherein, when the predetermined object is located in front of the host vehicle, the control unit forms a first region that overlaps at least a part of the predetermined object in the light distribution pattern and is darker than when the predetermined object is not located in front of the host vehicle, and a shaded region that follows at least a part of an edge of the first region, and
a shaded degree of the shaded region changes according to the brightness of the surrounding environment.

14. The vehicular headlight according to claim 13, wherein
a width of the shaded region in a direction perpendicular to a direction in which the shaded region follows the edge of the first region changes according to the brightness of the surrounding environment.

15. The vehicular headlight according to claim 13 or 14, wherein
a brightness of the shaded region changes according to the brightness of the surrounding environment.

16. The vehicular headlight according to claim 13 or 14, wherein
the shaded degree of the shaded region is stronger when the brightness of the surrounding environment is lower than a predetermined brightness than when the brightness of the surrounding environment is equal to or higher than the predetermined brightness.

17. The vehicular headlight according to claim 13 or 14, wherein
the shaded region includes a pair of side shaded regions that follow left and right edges of the first region, respectively, and
when the brightness of the surrounding environment is different between left and right sides, a shaded degree of the side shaded region located on one of the left and right sides where the brightness of the surrounding environment is low is stronger than a shaded degree of the side shaded region located on the other side where the brightness of the surrounding environment is high.

18. A vehicular headlight comprising:
a light unit configured to change a light distribution pattern of light to be emitted; and
a control unit configured to receive a signal from each of an object detection device that detects a predetermined object located in front of a host vehicle and a vibration sensor that detects an amplitude of vibration of the host vehicle and control the light unit,
wherein, when the predetermined object is located in front of the host vehicle, the control unit forms a first region that overlaps at least a part of the predetermined object in the light distribution pattern and is darker than when the predetermined object is not located in front of the host vehicle, and a shaded region that follows at least a part of an edge of the first region, and
a shaded degree of the shaded region becomes stronger as the amplitude of the vibration of the host vehicle is higher.

19. The vehicular headlight according to claim 18, wherein
the shaded region includes at least one of an upper shaded region following an upper edge of the first region and a lower shaded region following a lower edge of the first region.

20. The vehicular headlight according to claim 19, wherein
the shaded region includes at least the lower shaded region.

21. The vehicular headlight according to claim 18, wherein
when the amplitude of the vibration of the host vehicle is lower than a predetermined value, the shaded degree of the shaded region is not stronger.

22. The vehicular headlight according to claim 21, wherein
when the amplitude of the vibration of the host vehicle is lower than the predetermined value, the shaded degree of the shaded region is zero.

23. The vehicular headlight according to claim 18, wherein
when a period for which the vibration of the host vehicle having an amplitude equal to or higher than a predetermined value continues is less than a predetermined period, or when the number of times the vibration of the host vehicle having an amplitude equal to or higher than the predetermined value is consecutively repeated is smaller than a predetermined number, the shaded degree of the shaded region is not stronger.

24. The vehicular headlight according to any one of claims 18 to 23, wherein
a width of the first region in an up-down direction is larger as the amplitude of the vibration of the host vehicle is higher.
